# EUROPEAN PATENT APPLICATION

(11) **EP 2 378 279 A1**
(43) Date of publication of application: **19.10.2011**
(21) Application number: 09834831.1
(22) Date of filing: 21.12.2009
(51) Int. Cl.: G01N 23/04

(54) **X-RAY INSPECTION METHOD AND X-RAY INSPECTION APPARATUS**

(30) Priority: 22.12.2008 JP 2008326251
(71) Applicant: Omron Corporation, Kyoto-shi, Kyoto 600-8530 (JP)
(72) Inventor: MASUDA, Masayuki, Kyoto-shi Kyoto 600-8530 (JP); SUGITA, Shinji, Kyoto-shi Kyoto 600-8530 (JP); KATO, Noriyuki, Kyoto-shi Kyoto 600-8530 (JP); MATSUNAMI, Tsuyoshi, Kyoto-shi Kyoto 600-8530 (JP)
(74) Representative: Wilhelms · Kilian & Partner Patentanwälte
(86) International application number: PCT/JP2009/071242
(87) International publication number: WO 2010/074030

(57) **Abstract**

An X-ray inspection apparatus (100) includes an X-ray source (10), an X-tray detector (23), an X-ray detector drive unit (22), an image acquisition control mechanism (30) for controlling driving of the X-ray detector (23) by the X-ray detector drive unit (22) and acquisition of image data from the X-ray detector (23), an inspection object drive mechanism (20) for moving an inspection object (1), an X-ray source control mechanism (60), and an operation unit (70). The X-ray source control mechanism (60) causes the X-ray source (10) to output an X-ray based on an instruction from the operation unit (70). The image acquisition control mechanism (30) moves the X-ray detector (23) to a plurality of image pickup positions aligned in the Y direction based on an instruction from the operation unit (70). The inspection object drive mechanism (20) moves the inspection object (1) in the Y direction such that the X-ray detector (23) can detect an X-ray transmitted through the inspection object (1) at each image pickup position based on an instruction from the operation unit (70).

## Description

### TECHNICAL FIELD

The present invention relates to an X-ray inspection method and an X-ray inspection apparatus. More specifically, the present invention relates to an image pickup method for inspecting an object by using X-ray irradiation, which is a technique applicable to an X-ray inspection method and an X-ray inspection apparatus.

### BACKGROUND ART

In recent years, LSI (Large-Scale Integration) of higher degree of integration has been developed thanks to microfabrication technique of sub-microns, allowing functions which have conventionally been divided into a plurality of packages to be packed in one LSI. Since conventional QFPs (Quad Flat Packages) and PGAs (Pin Grid Arrays) can no longer accommodate the increased number of pins resulting from incorporating necessary functions in one package, LSIs ofBGAs (Ball Grid Arrays) and CSPs (Chip Size Packages) in particular have been used these days. For applications that need to be microminiaturized such as mobile telephones, a BGA package is used even if the number of required pins is not so large.

While BGA and CSP packages of LSI greatly contribute to microminiaturization, soldered portions and the like are not visible from the appearance after being assembled. For this reason, when a printed board and the like having BGA and CSP packages mounted thereon is inspected, a fluoroscopic image obtained by irradiating an inspection object with an X-ray is analyzed, to determine whether or not quality is acceptable.

For example, Patent Document 1 (Japanese Patent Laying-Oper, No. 2003-344316) discloses a method for reconstructing three-dimensional data of an object in inclined three-dimensional X-ray CT (Computed Tomography) by arbitrarily selecting an angle of X-ray irradiation.

Referring to Fig. 32, an X-ray inspection apparatus disclosed in Patent Document 1 is described. Fig. 32 is a schematic view of the X-ray inspection apparatus disclose in Patent Document 1. Referring to Fig. 32, this inspection apparatus obliquely irradiates an inspection object area (field of view) of an object with an X-ray.

Patent Document 2 (Japanese Patent Laying-Open No. 2006-162335) discloses an X-ray inspection apparatus in which two-dimensional inspection is conducted based on an X-ray image obtained by a parallel X-ray detection device, and three-dimensional inspection is conducted based on an X-ray image obtained by inclined X-ray detection means, so that both inspections can be conducted at high speed. A technique of reconstructing a three-dimensional image of an inspection object based on a plurality of X-ray images is also mentioned in this reference, A "filtered back-projection method" is proposed as an exemplary reconstruction method.

Referring to Fig. 33, three-dimensional inspection using the X-ray inspection apparatus disclose in Patent Document 2 is described. Referring to Fig. 33, when performing three-dimensional inspection, the X-ray inspection apparatus moves an inspection object and an X-ray detection device on a circular trajectory.

### PRIOR ART DOCUMENTS

### PATENT DOCUMENTS

Patent Document 1: Japanese Patent Laying-Open No. 2003-344316
Patent Document 2: Japanese Patent Laying-Open No. 2006-162335

### SUMMARY OF THE INVENTION

### PROBLEMS TO BE SOLVED BY THE INVENTION

In a conventional X-ray inspection method, AXI (Automated X-ray Inspection), namely, in-line inspection by using an X-ray, cannot be increased in speed.

As disclosed in Patent Documents 1 and 2, a complicated moving mechanism is required to move an X-ray detector on a circular trajectory for X-ray inspection. In addition, the movement requires time, which increases time for inspection.

The present invention was made to solve the above-described problems, and has an object to provide a high-speed X-ray inspection method and an X-ray inspection apparatus that can achieve high-speed X-ray inspection.

### MEANS FOR SOLVING THE PROBLEMS

According to an aspect of the present invention, provided is an X-ray inspection method for picking up images output from an X-ray source and transmitted through an inspection object area of an object by an X-ray detection unit, to reconstruct three-dimensional data, of the inspection object area based on the images as picked up. The X-ray inspection apparatus includes the steps of picking up the images with relative positional relation between an X-ray focal point position of the X-ray source and the inspection object area changed, and with the X-ray detection unit moved to an image pickup position determined by the relative positional relation between the X-ray focal point position and the inspection object area, repeating the step such that, with respect to the inspection object area, an angle formed by an imaginary plane including a point to be the X-ray focal point position and a line segment connecting the X-ray focal point position and the inspection object area takes a plurality of different values, and reconstructing the three-dimensional data from a plurality of images picked up for the inspection object area at a plurality of the angles.

Preferably, the X-ray focal point position is fixed, and the object is moved in the step.

More preferably, the step of repeating includes the steps of moving the X-ray detection unit linearly to a plurality of the image pickup positions aligned in a first direction, moving the X-ray detection unit in a second direction different from the first direction, and moving the X-ray detection unit linearly to another plurality of the image pickup positions aligned in the first direction after moving the X-ray detection unit in the second direction.

Preferably, the step of repeating includes the step of scanning the X-ray focal point position in a first direction in which a plurality of the image pickup positions are aligned.

More preferably, in the step of repeating, the X-ray focal point position is scanned on a straight line along the first direction.

Stall more preferably, the step of repeating includes the steps of moving the X-ray detection unit linearly to the plurality of the image pickup positions aligned in the first direction, moving the X-ray detection unit in a second direction different from the first direction, and moving the X-ray detection unit linearly to the plurality of the image pickup positions aligned in the first direction after moving the X-ray detection unit in the second direction.

Alternatively, still more preferably, the inspection object, area is divided into a plurality of partial areas in a second direction different from the first direction, the X-ray detection unit includes a plurality of X-ray detectors aligned in the second direction, and in the step of moving the X-ray detection unit in the first direction, each of the X-ray detectors is moved linearly in the first direction such that the X-rays output from the X-ray focal point position in common and transmitted through the partial areas different from each other enter the X-ray detectors different from each other.

Further preferably, in the step of moving the X-ray detection unit in the first direction, while a part of the plurality of X-ray detectors is picking up the images, another part of the X-ray detectors different from the part of the plurality of X-ray detectors is moved in the first direction.

Alternatively, preferably, the X-ray source is a scanning X-ray source capable of scanning the X-ray focal point position on a plurality of lines along the first direction, the X-ray detection unit includes a plurality of X-ray detectors, in the step of moving the X-ray detection unit in the first direction, each of the X-ray detectors is moved linearly in the first direction such that the X-rays output from the lines different from each other and transmitted through the inspection object area enter the X-ray detectors different from each other, and in the step of repeating, the X-ray focal point position is scanned on each of the lines.

More preferably, the scanning X-ray source includes a plurality of reflective targets arranged on the plurality of lines, respectively,

Alternatively, still more preferably, in the step of moving the X-ray detection unit in the first direction, while a part of the plurality of X-ray detectors is picking up the images, another part of the plurality of X-ray detectors different from the part of the X-ray detectors is moved in the first direction.

Alternatively, still more preferably, the step of repeating includes the steps of moving the X-ray detection unit in a second direction different from the first direction, and moving the X-ray detection unit linearly to a plurality of the images pickup positions aligned in the first direction after moving the X-ray detection unit in the second direction.

Preferably, the X-ray detection unit includes a plurality of light receiving units aligned in a first direction.

According to another aspect of the present invention, an X-ray inspection apparatus for reconstructing three-dimensional data of an inspection object area of an object is provided. The X-ray inspection apparatus includes an X-ray source for outputting X-rays, an X-ray detection unit for picking up images of the X-rays, a moving mechanism for moving the X-ray detection unit, and a control unit for controlling operation of the X-ray inspection apparatus. The control unit is configured to cause the X-ray source and the X-ray detection unit to pick up images with relative positional relation change and movements performed by causing the X-ray source to change relative positional relation between an X-ray focal point position of the X-ray source and the inspection object area and by causing the moving mechanism to move the X-ray detection unit to an image pickup position determined by the relative positional relation between the X-ray focal point position and the inspection object area, cause pickup of the images to be repeated such that an angle formed by an imaginary plane including the inspection object area and a point to be the X-ray focal point position and a line segment connecting the X-ray focal point position and the inspection object area takes a plurality of different values, and reconstruct the three-dimensional data from a plurality of images picked up for the inspection object area at a plurality of the angles.

More preferably, the X-ray source is a scanning X-ray source capable of scanning the X-ray focal point position on a single straight line along a first direction in which a plurality of the image pickup positions are aligned.

Alternatively, more preferably, the X-ray source is a scanning X-ray source capable of scanning the X-ray focal point position on a plurality of lines along a first direction in which a plurality of the image pickup positions are aligned, the X-ray detection unit includes a plurality of X-ray detectors, and each of the X-ray detectors is arranged such that the X-rays output from the lines different from each other and transmitted through the inspection object area enter the X-ray detectors different from each other.

Still more preferably, the scanning X-ray source includes a plurality of reflective targets arranged on the plurality of lines, respectively.

### EFFECTS OF THE INVENTION

According to the present invention, an X-ray detection unit is linearly moved to a plurality of image pickup positions aligned in a certain direction. Moreover, positional relation between an X-ray focal point and an inspection object area is changed such that an X-ray transmitted through the inspection object area enters the X-ray detection unit at each image pickup position. Therefore, the present invention can increase the speed of X-ray inspection.

### BRIEF DESCRIPTION OF THE DRAWINGS

Fig. 1 is a schematic block diagram of an X-ray inspection apparatus.
Fig. 2 illustrates a structure of the X-ray inspection apparatus.
Fig. 3 shows the X-ray inspection apparatus having substrate rails as an inspection object drive mechanism.
Fig. 4 shows trajectories of an X-ray detector and an inspection object according to a first embodiment.
Fig. 5 illustrates image pickup positions of the X-ray detector according to the

### first embodiment.

Fig. 6 shows trajectories of an X-ray detector and an inspection object in a conventional method.
Fig. 7 shows image pickup positions in the conventional method.
Fig. 8 is a flowchart of overall X-ray inspection according to the first embodiment.
Fig. 9 is a flowchart of the CT image pickup process illustrated in Fig. 8.
Fig. 10 shows an arrangement of the X-ray detector and the inspection object that requires division of the inspection object.
Fig. 11 illustrates a structure of an X-ray inspection apparatus according to a second embodiment.
Fig. 12 is a cross-sectional view of an X-ray source.
Fig. 13 is a perspective view or the X-ray source.
Fig. 14 shows an X-ray source having a continuous surface target.
Fig. 15 shows inspection object areas in the second embodiment.
Fig. 16 illustrates an example of movements of an X-ray focal point position and an X-ray detector in the Y direction in the second embodiment.
Fig. 17 shows an example of positional relation among the X-ray detectors, the inspection object, and the X-ray focal point position at the time of image pickup in the second embodiment.
Fig. 18 illustrates movements of the X-ray detector and the inspection object in the X direction in the second embodiment.
Fig. 19 shows an example of part of operation of the X-ray inspection apparatus when inspecting a plurality of inspection object areas.
Fig. 20 illustrates an example of operation of the X-ray inspection apparatus when inspecting all the inspection object areas.
Fig. 21 is a flowchart of overall X-ray inspection according to the second embodiment.
Fig. 22 is a flowchart of the CT image pickup process illustrated in Fig. 21.
Fig. 23 illustrates a structure of an X-ray inspection apparatus according to a third embodiment.
Fig. 24 illustrates an example of movements of an X-ray focal point position and an X-ray detector in the Y direction in the third embodiment.
Fig. 25 shows an example of positional relation among X-ray detectors, the inspection object, and the X-ray focal point position at the time of image pickup in the third embodiment.
Fig. 26 illustrates independent movement of the detectors according to the third embodiment.
Fig. 27 illustrates movements of the X-ray detectors and the inspection object in the X direction in the third embodiment.
Fig. 28 is a flowchart of overall X-ray inspection according to the third embodiment.
Fig. 29 is a flowchart of the CT image pickup process illustrated in Fig. 28.
Fig. 30 illustrates a structure of an X-ray inspection apparatus according to a fourth embodiment.
Fig. 31 illustrates an image pickup technique according to the fourth embodiment.
Fig. 32 is a schematic view of an X-ray inspection apparatus disclosed in Patent Document 1.

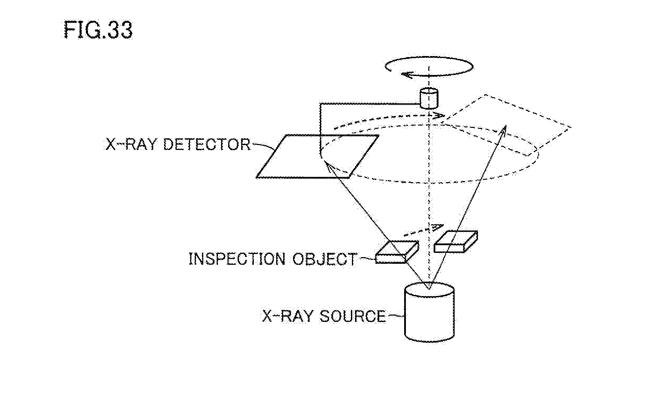

Fig. 33 is a schematic view of an. X-ray inspection apparatus disclosed in Patent Document 2.

### MODES FOR CARRYING OUT THE INVENTION

Embodiments of the present invention will be described below with reference to the drawings. In the following description, the same components are denoted by the same reference characters. Their names and functions are also the same. Therefore, detailed description thereof will not be repeated.

### [First Embodiment]

### (Structure Overview)

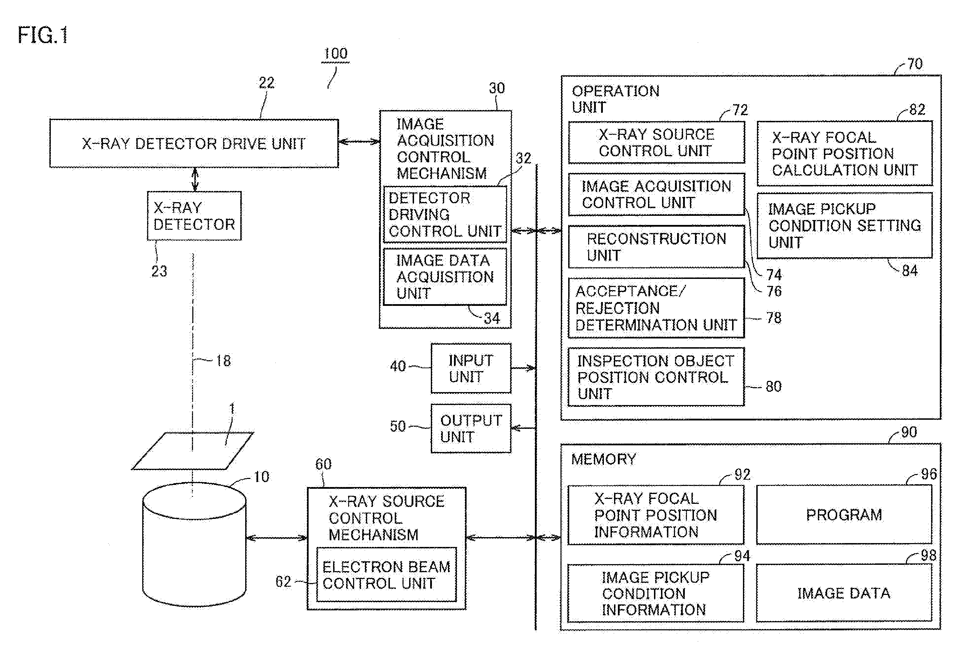

Referring to Fig. 1, the structure of an X-ray inspection apparatus 100 according to a first embodiment will be described. Fig. 1 is a schematic block diagram of X-ray inspection apparatus 100 according to the first embodiment.

X-ray inspection apparatus 100 includes an X-ray source 10 outputting an X-ray 18, an X-ray detector 23, an X-ray detector drive unit 22, and an image acquisition control mechanism 30 for controlling driving of X-ray detector 23 by X-ray detector drive unit 2.2 and acquisition of image data from X-ray detector 23. X-ray inspection apparatus 100 further includes an input unit 40, an output unit 50, an X-ray source control mechanism 60, an operation unit 70, and a memory 90.

An inspection object 1 is arranged between X-ray source 10 and X-ray detector 23. In the present embodiment, inspection object 1 shall be a circuit board having components mounted thereon.

X-ray source 10 is controlled by X-ray source control mechanism 60, and irradiates inspection object 1 with X-ray 18.

Inspection object 1 is moved by an inspection object drive mechanism 20 (not shown in Fig. 1). Inspection object drive mechanism 20 can be implemented by, for example, an X-Y-Z stage or a pair of rails holding inspection object 1 therebetween. Inspection object drive mechanism 20 will be described later in detail.

X-ray detector 23 is a two-dimensional X-ray detector for detecting an X-ray output from X-ray source 10 and transmitted through inspection object 1, and forming an image. X-ray detector 23 can be implemented by an I.I. (Image Intensifier) tube or an FPD (flat panel defector) In terms of installation space, X-ray detector 23 is desirably implemented by an FPD. Further, X-ray detector 23 desirably has high sensitivity so that it can be used for in-line inspection, and particularly desirably is a direct conversion FPD using CdTe.

X-ray detector drive unit 22 moves X-ray detector 23 to a designated position. A detailed structure of X-ray detector drive unit 22 will be described later. A position of X-ray detector 23 driven by X-ray detector drive unit 22 can be seen from a position sensor (not shown), and the position of X-ray detector 23 can be provided into operation unit 70 through detector driving control unit 32.

Image acquisition control mechanism 30 includes a detector driving control unit 32 and an image data acquisition unit 34. Detector driving control unit 32 controls X-ray detector drive unit 22 to move X-ray detector 23 to a position designated by operation unit 70. Image data acquisition unit 34 acquires image data of X-ray detector 23 designated by operation unit 70.

Input unit 40 is an operation input device for receiving instruction input from a user and the like. Output unit 50 is a device for outputting a measurement result and the like to the outsize. In the present embodiment, output unit 50 is a display for displacing an X-ray image and the like formed by operation unit 70.

Namely, the user can input various items through input unit 40, and various operation results obtained by processing of operation unit 70 are displayed on output unit 50. An image displayed on output unit 50 may be outputs for visual acceptance/rejection determination by the user, or may be output as a result of acceptance/rejection determination made by an acceptance/rejection determination unit 78 to be described later.

X-ray source control mechanism 60 includes an electron beam control unit 62 controlling output of an electron beam. Electron beam control unit 62 receives designation of an X-ray focal point position, and X-ray energy (tube voltage, tube current) from operation unit 70. The X-ray energy designated varies with a structure of an inspection object.

Operation unit 70 executes a program 96 stored in memory 90 to control each unit, and performs predetermined operation processing. Operation unit 70 includes an X-ray source control unit 72, an image acquisition control unit 74, a reconstruction unit 76, an acceptance/rejection determination unit 78, an inspection object position control unit 80, an X-ray focal point position calculation unit 82, and an image pickup condition setting unit 84

X-ray source control unit 72 determines an X-ray focal point position and X-ray energy, and transmits a command to X-ray source control mechanism 60.

Image acquisition control unit 74 transmits a command to image acquisition control mechanism 30 such that X-ray detector 23 acquires an image. Image acquisition control unit 74 acquires image data from image acquisition control mechanism 30.

Reconstruction unit 76 reconstructs three-dimensional data from a plurality of pieces of image data acquired by image acquisition, control unit 74.

Acceptance/rejection determination unit 78 determines whether or not an inspection object is acceptable based on three-dimensional data reconstructed by reconstruction unit 76, or fluoroscopic data. For example, acceptance/rejection determination unit 78 recognizes a shape of a solder ball, and determines whether or not the ball is acceptable by determining whether or not the recognized shape is within a predetermined tolerable range. Since an algorithm for the acceptance/rejection determination, or input information to the algorithm varies with an inspection object, acceptance/rejection determination unit 78 obtains them from image pickup condition information 94.

Inspection object position control unit 80 controls inspection object drive mechanism 20.

X-ray focal point position calculation unit 82 calculates an X-ray focal point position, an irradiation angle and the like for an inspection area of inspection object 1, when inspecting the inspection area.

Image pickup condition setting unit 84 sets conditions for outputting an X-ray from X-ray source 10 (e.g., a voltage applied to the X-ray source, image pickup time, etc.), depending on inspection object 1.

Memory 90 includes X-ray focal point position information 92, image pickup condition information 94, program 96 for realizing the respective functions performed by operation unit 70 described above, and image data 98 picked up by X-ray detector 23. X-ray focal point position information 92 contains the X-ray focal point position calculated by X-ray focal point position calculation unit 82. Image pickup condition information 94 contains the image pickup conditions set by image pickup condition setting unit 84 and information about the algorithm for acceptance/rejection determination.

Memory 90 is only required to accumulate data. Memory 90 is formed of a storage device such as a RAM (Random Access Memory), an EEPROM (Electrically Erasable and Programmable Read-Only Memory), or an HDD (Hard Disc Drive), for example.

### (Specific Structure)

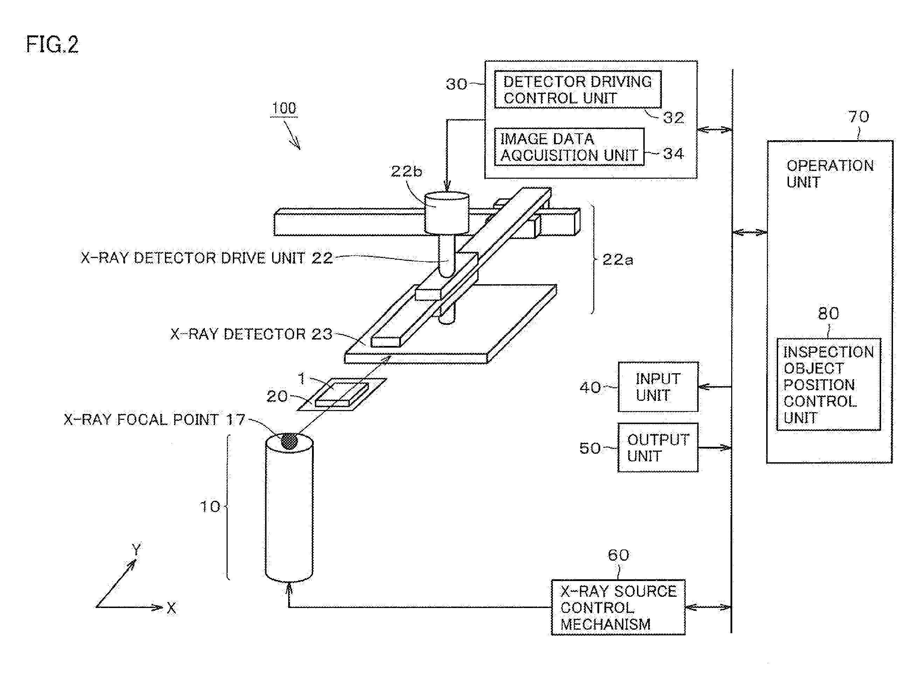

A specific structure of X-ray inspection apparatus 100 according to the first embodiment will now be described with reference to Fig. 2. Fig. 2 illustrates the structure of X-ray inspection apparatus 100 according to the first embodiment. It is noted that in Fig. 2, the same parts as those in Fig. 1 are denoted by the same reference characters. In addition, Fig. 2 illustrates portions necessary for description directly related to control of an X-ray focal point position, control of an X-ray detector position, control of an inspection object position, and the like, extracted from the portions shown in Fig. 1.

In the present embodiment, X-ray source 10 is a fixed-focal-point X-ray source in which a position where an X-ray is generated (X-ray focal point position 17) is fixed. X-ray source 10 generates an X-ray in accordance with an instruction from operation unit 70 through scanning X-ray source control mechanism 60.

X-ray detector drive unit 22 includes an orthogonal biaxial robot arm 22a and a detector support unit 22b. X-ray detector drive unit 22 moves X-ray detector 23 in the X and Y directions with robot arm 22a. Detector driving control unit 32 transmits information about a position of X-ray detector 23 at the time of movement, to operation unit 70.

It is noted that in the present embodiment. X-ray detector drive unit 22 moves X-ray detector 23 farther in the Y direction than in the X direction, as will be described later Therefore, robot arm 22a is preferably implemented by mounting a Y-axis arm on an X-axis arm as shown in Fig. 2. This structure can increase the speed of movement in the Y direction since the total weight of an object to be moved by the Y-axis arm is light

However, the structure of X-ray detector drive unit 22 is not limited as such. X-ray detector drive unit 22 may be implemented by another mechanism that can achieve such movements in the X and Y directions. It is noted that X-ray detector drive unit 22 preferably further includes a mechanism vertically moving X-ray detector 23 to adjust magnifying power.

Inspection object drive mechanism 20 includes an actuator and a mechanism for fixing the inspection object. Inspection object drive mechanism 20 is capable of moving a field of view of the inspection object in the X and Y directions by an inspection object position drive mechanism controlled by inspection object position control unit 80 in operation unit 70, independently of X-ray detectors 23.1 or 23.2 described above.

For in-line inspection, inspection object drive mechanism 20 basically moves inspection object 1 in the X direction. More specifically, inspection object drive mechanism 20 moves inspection object 1 yet to be inspected from the right (or left) to the left (or right) in Fig. 2 for transfer into a range of X-ray irradiation. Inspection object drive mechanism 20 moves inspection object 1 having been inspected further to the left (or right). It is noted that, as will be described later, inspection object drive mechanism 20 moves inspection object 1 in the Y direction as well to pick up an image necessary for data reconstruction.

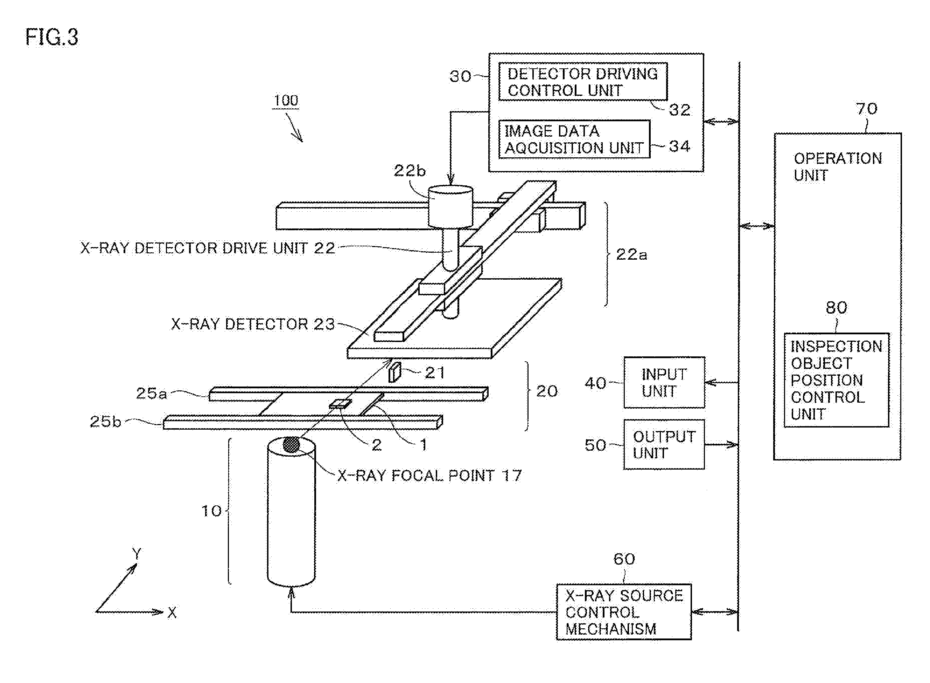

Inspection object drive mechanism 20 is preferably implemented by a device that does not interfere with an X-ray. For example, inspection object drive mechanism 20 can be implemented by substrate rails. Fig. 3 shows the X-ray inspection apparatus 100 having substrate rails as inspection object drive mechanism 20

Referring to Fig. 3, inspection object drive mechanism 20 includes rails 25a and 25b that hold inspection object 1 therebetween at its opposite sides, and a position sensor 21 measuring a position of inspection object 1 in the Z direction. It is noted that inspection object 1 shall be a circuit board in Fig. 3. A circuit component 2 is arranged on inspection object 1. An area including circuit component 2 is an inspection area.

Rails 25a and 25b are capable of moving inspection object 1 in the X, Y and Z directions. Position sensor 21 measures a position of inspection object 1, particularly of circuit component 2 in the Z direction. The position of circuit component 2 varies with inspection object 1 due to warpage of circuit board 2. Rails 25a and 25b adjust a position of inspection object 1 in the height direction based on the result of measurement by position sensor 21.

Referring back to Fig. 2, operation unit 70 transmits instructions to detector driving control unit 32, image data acquisition unit 34, and scanning X-ray source control mechanism 60, and executes a program illustrated in a flowchart for inspection processing to be described later.

Particularly, operation unit 70 acquires an X-ray fluoroscopic image and transfers picked up image data at timing instructed by an instruction through detector driving control unit 32. Operation unit 70 can control operation of the inspection apparatus by using input from input unit 40, and output a status of each unit or an inspection result from output unit 50.

### (Image Pickup Technique)

For reconstructing three-dimensional data, images of an inspection object area need to be picked up from a plurality of directions. X-ray inspection apparatus 100 according to the present embodiment achieves image pickup from a plurality of directions by moving X-ray detector 23 and inspection object 1, respectively, in the X-Y plane.

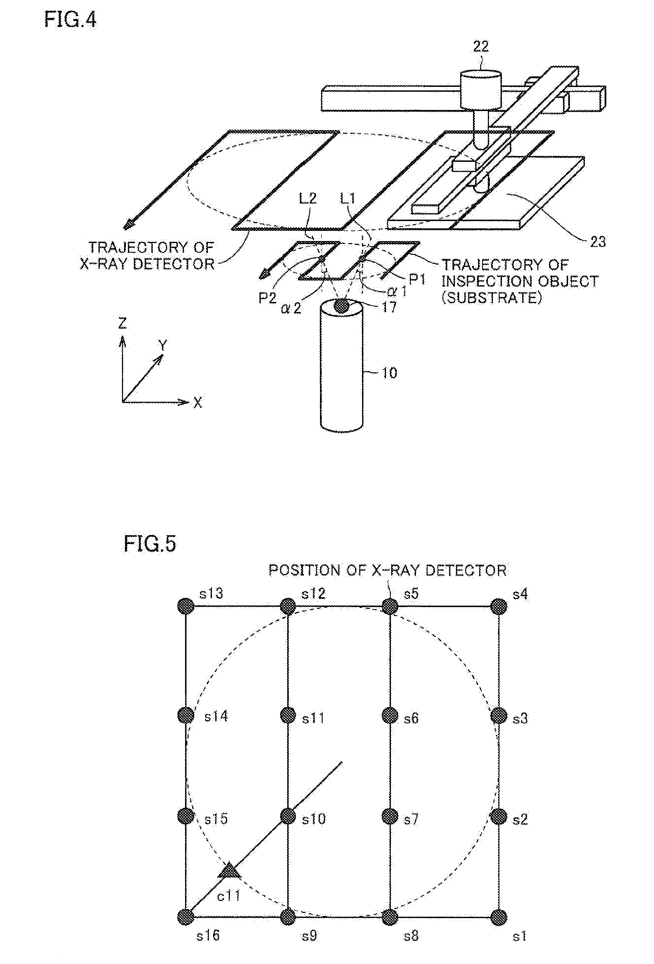

Trajectories of X-ray detector 23 and inspection object 1 according to the present embodiment will now be described with reference to Figs. 4 and 5. Fig. 4 shows trajectories of X-ray detector 23 and inspection object 1 according to the first embodiment. Fig. 5 illustrates image pickup positions of X-ray detector 23 according to the first embodiment.

Referring to Figs. 4 and 5, detector drive unit 22 first moves X-ray detector 23 successively to image pickup positions s1, s2, s3, and s4 aligned in the Y direction. Detector drive unit 22 then moves X-ray detector 23 in the X direction to an image pickup position s5. Detector drive unit 22 repeats such linear movements in the Y direction and in the X direction to move the X-ray detector to image pickup positions s.1 to s16.

Inspection object moving mechanism 20 also moves inspection object 1 such that an X-ray transmitted through the inspection object area of inspection object 1 enters X-ray detector 23 at each image pickup position. Therefore, as shown in Fig. 4, the trajectory of inspection object 1 will be similar to that of X-ray detectors 23.

In other words, as shown in Fig. 4, an image is picked up with relative positional relation between X-ray focal point position 17 of X-ray source 10 and inspection object 1 (strictly saying, the inspection object area of inspection object 1) successively change, and with X-ray detector 23 moved to an image pickup position determined by the relative positional relation between X-ray focal point position 17 of X-ray source 10 and (the inspection object area of) inspection object 1. Considering image pickup at each image pickup position, with respect to (the inspection object area of) inspection object 1, image pickup is repeated such that an angle (image pickup angle) formed by an imaginary plane including a point to be X-ray focal point position 17 (in the example of Fig. 4, a plane that is in parallel to the X-Y plane and includes X-ray focal point position 17) and a line segment connecting X-ray focal point position 17 and (the inspection object area of) inspection object 1 takes a plurality of different values.

In the example shown in Fig. 4, considering points P1 and P2 where image pickup is performed on the trajectory of inspection object 1, at point P1, the angle formed by a line, segment L1 connecting X-ray focal point position 17 and point P1 with the imaginary plane is α1, and at point P2, the angle formed by a line segment L2 connecting X-ray focal point position 17 and point P2 with the imaginary plane is α2. These angles α1 and α2 take different values. In this manner, a plurality of images whose image pickup angles are different can be acquired by performing successive image pickup while moving inspection object 1 or the trajectory as shown in Fig. 4,

The image pickup technique according to the present embodiment does not involve circular movements of X-ray detector 23 and inspection object 1, and can thereby increase the speed of X-ray inspection. By way of example, the case of moving X-ray detector 23 with an X-Y stage, and picking up images of an inspection object from sixteen directions will now be described.

In the case of moving X-ray detector 23 (and the inspection object) on a circular trajectory, X-ray detector 23 needs to be moved in the X and Y directions fifteen times, respectively. When changing the image pickup position, the total moving time is (the longer one of X-axis moving time and Y-axis moving time)×15 even if X-axis movement and Y-axis movement of X-ray detector 23 are performed in parallel.

On the other hand, the case of linear trajectory image pickup as described in the present embodiment can achieve a single-axis (particularly Y-axis) movement at higher speed than two-axis cooperative operation. On the trajectory shown in Fig. 5, the total moving time is the sum of time for twelve Y-axis movements and time for three X-axis movements. Therefore, the image pickup technique according to the present embodiment can increase the speed of inspection.

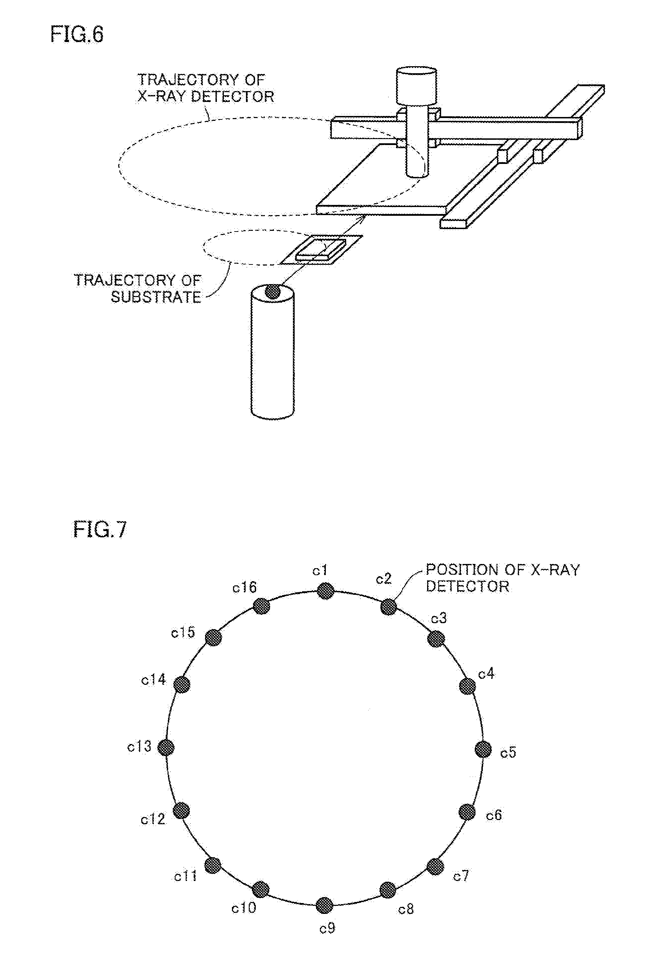

Moreover, this image pickup technique can utilize the movable range of detector drive unit 22 more effectively and improve the reconstruction data in image quality as compare to a conventional method of using an X-ray inspection apparatus performing circular trajectory movement. This will be described with reference to Fig. 5 (already mentioned), and Figs. 6 and 7. Fig. 6 shows trajectories of X-ray detector 23 and inspection object 1 in the conventional method Fig, 7 shows image pickup positions in the conventional method.

In Fig. 5, the trajectory of the X-ray detector shown in Fig. 7 is indicated by dotted lines. For comparison between the methods, the number of image pick positions shall be sixteen in either method The diameter of the circular trajectory shall be identical to the length in the X direction and the length in the Y direction of the trajectory shown in Fig. 5. It is noted that, as will be understood from the description below, it is preferable that a rectangle circumscribing the circular trajectory should also form a part of the trajectory as shown in Fig. 5 when practically adopting the present method.

According to the present method, images can be picked up more obliquely than image pickup on a circular trajectory, For example, the image pickup angle at image pickup position s16 in the present method is greater than a corresponding image pickup angle at image pickup position c11 on the circular trajectory. Therefore, according to the present method, reconstruction data can be improved in image quality.

Moreover, according to the present method, a plurality of images whose image pickup angles are different can be generated, while image pickup on a circular trajectory results in oblique CT with a constant image pickup angle. Therefore, the present method can achieve improved image quality of reconstruction data, such as reduction of artifacts.

### (Flow of Process)

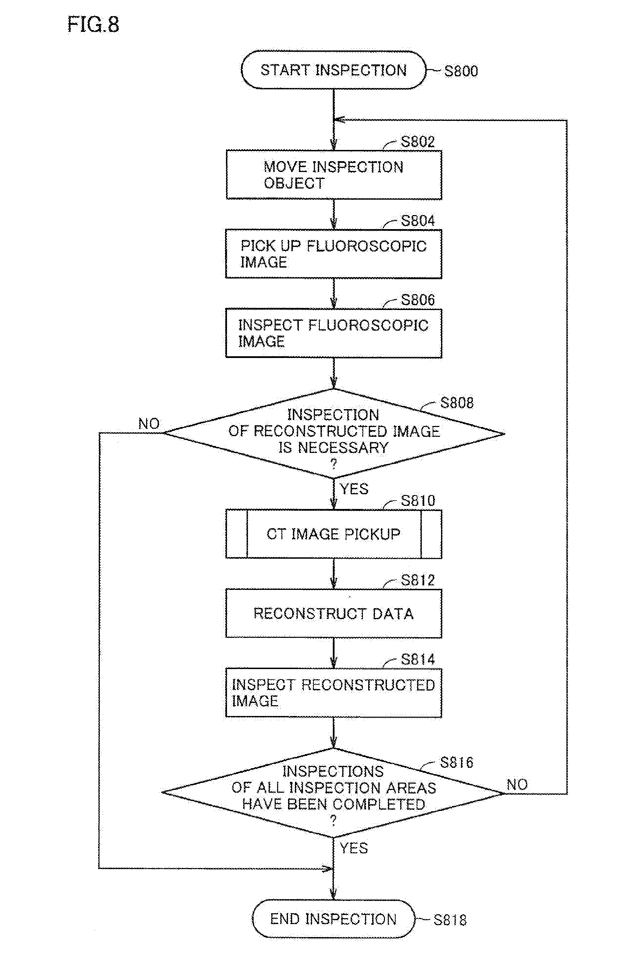

Fig. 8 is a flowchart of overall X-ray inspection according to the first embodiment. Referring to Fig. 8, the flow of overall X-ray inspection according to the first embodiment will now be described.

Referring to Fig. 8, when the process is started (step S800), X-ray inspection apparatus 100 moves inspection object 1 (strictly saying, an inspection object area of inspection object 1) to a position where an image can be picked up (step S802). Generally, for X-ray inspection, an optical camera (not shown) is provided for specifying the position of inspection object 1 and, it is possible to determine the inspection object area based on images of the optical camera. Alternatively, the inspection object area may be automatically determined by X-ray inspection apparatus 100 based on the CAD data of inspection object 1, or may be determined based on the visual observation by the operator.

Then, X-ray inspection apparatus 100 picks up a fluoroscopic image (step S804). X-ray inspection apparatus 100 inspects the fluoroscopic image and determines whether or not a field of view (the scope picked up in the fluoroscopic image) of inspection object 1 is acceptable based on the acquired fluoroscopic image (step S806) Since various methods for acceptance/rejection determination have been proposed and known, detailed description thereof will not be provided. For example, for the most basic inspection, determination is made by binarizing the fluoroscopic image with a constant value, comparing the binarized fluoroscopic image with design information such as CAD data, and determining whether or not a component exists at a predetermined position on the fluoroscopic image based on an area thereof.

Thereafter, X-ray inspection apparatus 100 determines whether or not inspection by a reconstructed data image is necessary (step S808). A reference for determination may be set in advance based on design information such as the CAD data, or it may be determined based on the result of acceptance/rejection determination of fluoroscopic image. By way of example, in inspection of mounting boards, when components are mounted only on one side, it is possible to determine acceptance/rejection from the fluoroscopic image and, therefore, the acceptance/rejection determination using the reconstructed image may not be necessary.

If the inspection by the reconstructed data is unnecessary (NO at step S808), X-ray inspection apparatus 100 ends the inspection (step S818).

If the inspection by the reconstructed image is necessary (YES at step S808), X-ray inspection apparatus 100 performs CT image pickup for the inspection object area (step S810). In the CT image pickup, X-ray inspection apparatus 100 picks up images of the inspection object area from a plurality of directions. Details of step S810 will be described later,

Next, X-ray inspection apparatus 100 generates a reconstructed data image from the images picked up from a plurality of directions (step S812). Various methods for reconstruction have been proposed and, by way of example, the Feldkamp method may be adopted.

Thereafter, X-ray inspection apparatus 100 determines acceptance/rejection with the reconstructed image (step S814). As the method for determining acceptance/rejection, a method directly using the three-dimensional data, a method using two-dimensional data (topographic image), or a method using one-dimensional data (profile) may be possible. These methods for determining acceptance/rejection are well known, and the method for determining acceptance/rejection suitable for the item to be inspected may be used. Therefore, detailed description will not be repeated here. In the following, an example of acceptance/rejection determination will be described.

First, the three-dimensional reconstructed image is binarized with a constant value. A position of a component (e.g., a solder ball of BGA) in the reconstructed image is specified based on design information such as CAD data. A volume of a pixel adjacent to the position of the component can be calculated based on the binarized image, to determine presence or absence of the component.

Further, X-ray inspection apparatus 100 determines whether or not inspections of all inspection object areas have been conducted (step S816). If there is an inspection object area for which inspection is not yet finished (NO at step S816), the process returns to step S802. If inspections are completed for all the inspection object areas (YES at step S816), X-ray inspection apparatus 100 ends the inspection (step S818).

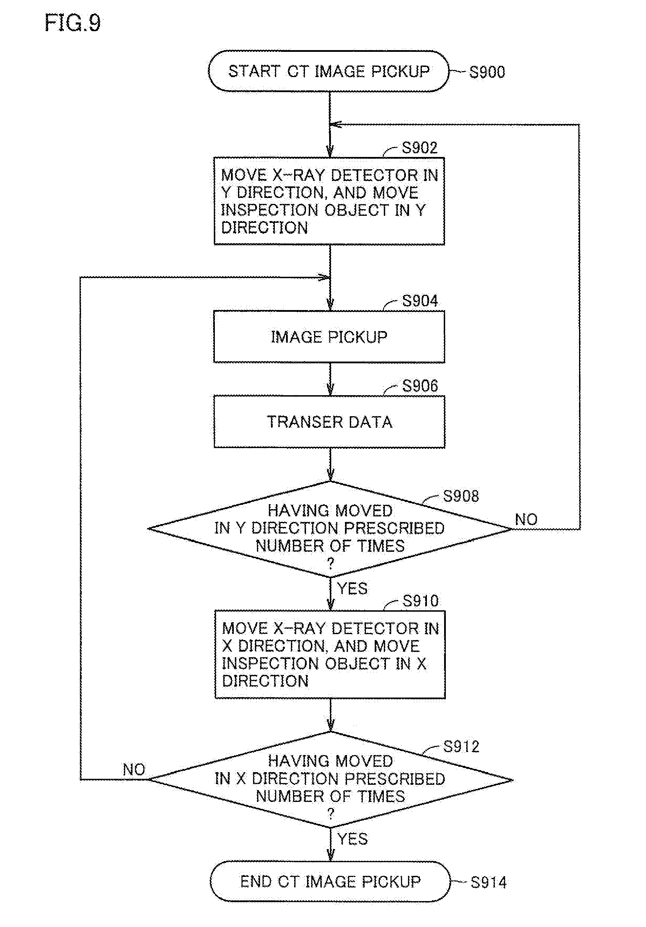

CT image pickup according to the first embodiment will now be described in detail with reference to Fig. 9. Fig. 9 is a flowchart of the CT image pickup process illustrate in Fig. 8.

Referring to Fig. 9, when CT image pickup for one field of view is started (S900), first, X-ray inspection apparatus 100 moves X-ray detector 23 and inspection object 1 in the Y direction such that an image of a current inspection object area is picked up at a predetermined image pickup position (step S902). The image pickup position can be automatically calculated from design information such as CAD data.

Next, X-ray inspection apparatus 100 picks up an image of the inspection object area (step S904), Data on the picked up image of the inspection object area can be obtained by emitting an X-ray from X-ray source 10 and exposing X-ray detector 23. Time for exposure can be determined in advance based on the size of the inspection object area, intensity of the X-ray generated by X-ray source 10, and the like.

Next, X-ray inspection apparatus 100 transfers the data on the image picked up by X-ray detector 23 to operation unit 70 (step S906). Specifically, in order to reconstruct three-dimensional data, image data acquisition unit 34 transfers the data on the picked up image to operation unit 70 performing reconstruction processing.

Next, X-ray inspection apparatus 100 further determines whether X-ray detector 23 or inspection object 1 has been moved in the Y direction a prescribed number of times (step S908), For example, the prescribed number of times may be determined from design information such as CAD data before inspection, or it may be determined based on the visual observation by the operator. It is noted that in the example shown in Figs. 4 and 5, the prescribed number of times is three.

If the prescribed number of times has not been reached (NO at step S908), the process returns to step S902. If the prescribed number of times has been reached (YES at step S908), X-ray inspection apparatus 100 moves X-ray detector 23 and inspection object 1 in the X direction such that an image of the current inspection object area is picked up at a predetermined image pickup position (step S910).

Next, X-ray inspection apparatus 100 further determines whether or not X-ray detector 23 or inspection object 1 has been moved in the X direction a prescribed number of times (step S912). For example, the prescribed number of times may be determined from design information such as CAD data before inspection. It is noted that in the example shown in Figs. 4 and 5, the prescribed number of times is three.

If the prescribed number of times has not been reached (NO at step S912), the process returns to step S904. If the prescribed number of times has been reached (YES at step S912), X-ray inspection apparatus 100 ends CT image pickup (step S914).

### (Modification)

In Figs. 2 and 3, X-ray detector 23 is large enough for inspection object 1, and seems that an image of the whole range of inspection object 1 can be picked up by X-ray detector 23. However, depending on the size of X-ray detector 23 and inspection object 1, as well as positional relation therebetween, an image of the whole range of inspection object 1 may not be picked up once.

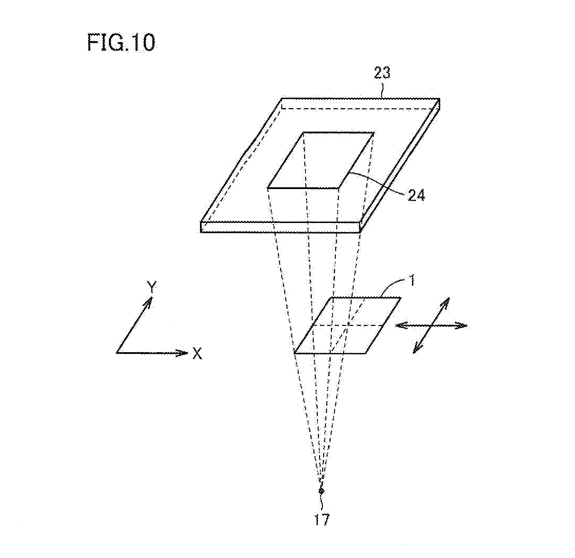

In such a case, X-ray inspection apparatus 100 will divide inspection object 1 into a plurality of inspection object areas for image pickup. Referring to Fig. 10, the example that requires division of inspection object 1 into a plurality of inspection object areas will now be described. Fig, 10 shows an arrangement of X-ray detector 23 and inspection object 1 that requires division of inspection object 1.

X-ray detector 23 detects an X-ray at light receiving unit 24. Light receiving unit 24 is often disposed in a partial region near the center of X-ray detector 23, as shown in Fig. 10. Thanks to geometrical relation among X-ray focal point position 17, inspection object 1, and the X-ray detector, only that enters light receiving unit 24 in this case is an X-ray having been transmitted through one quarter of the area of inspection object 1. Therefore, when inspecting the whole area of inspection object 1, X-ray inspection apparatus 100 divides inspection object 1 into four inspection object areas, and inspects each inspection object area.

It is noted that, in the above example, X-ray detector 23 and inspection object 1 are moved in the two directions (X and Y directions). However, X-ray detector 23 and inspection object 1 may only be moved in one direction should three-dimensional data of sufficient quality can be reconstructed by image pickup at a plurality of image pickup positions aligned in one direction, However, to obtain reconstruction data of favorable quality, it is generally preferable to pick up image of the inspection object at image pickup positions aligned in two directions, as described in the present embodiment.

### [Second Embodiment]

### (Structure)

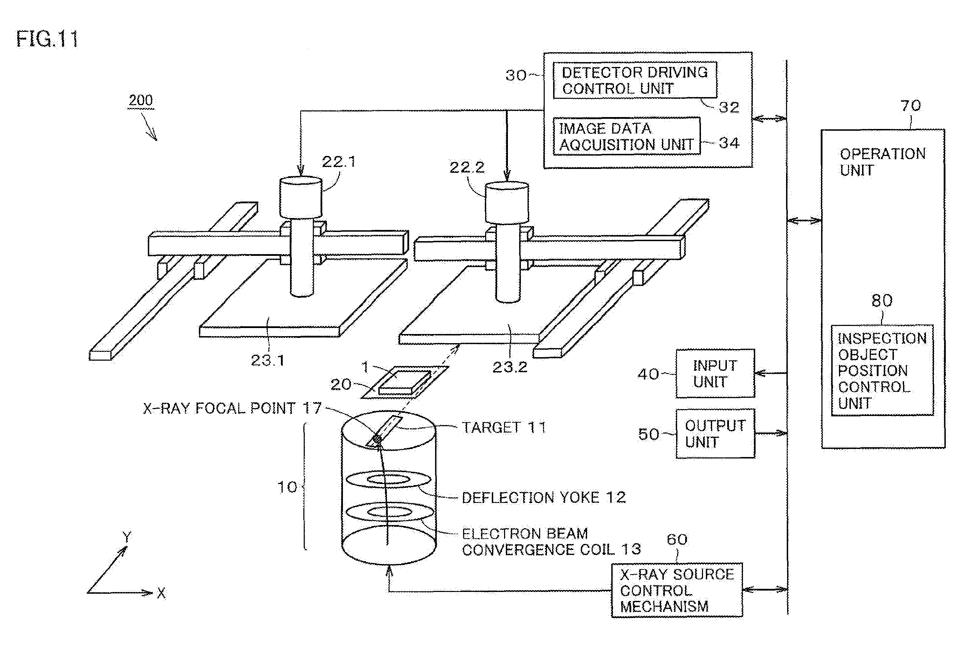

Referring to Fig. 11, a structure of an X-ray inspection apparatus 200 according to a second embodiment will be described. Fig. 11 illustrates the structure of X-ray inspection apparatus 200 according to the second embodiment.

X-ray inspection apparatus 200 includes X-ray source 10, X-ray detectors 23.1 and 23.2, an X-ray detector drive units 22.1 and 22.2, image acquisition control mechanism 30, input unit 40, output unit 50, X-ray source control mechanism 60, operation unit 70, and memory 90. Image acquisition control mechanism 30, X-ray source control mechanism 60, operation unit 70, and memory 90 each have the structure as described with reference to Fig. 1. Differences from the first embodiment lie in the structure of X-ray source 10, and in that two X-ray detectors and two X-ray detector drive units 22 are provided.

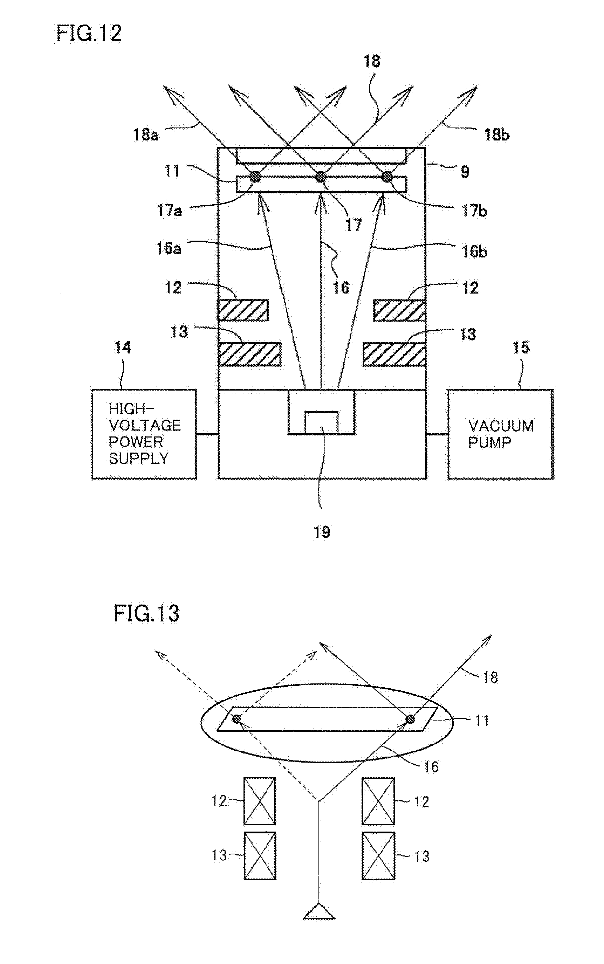

X-ray source 10 according to the second embodiment is a scanning X-ray source capable of scanning X-ray focal point position 17 in one direction. Referring to Fig. 11 (already mentioned) and Fig. 12, the structure of X-ray source 10 according to the second embodiment will now be described. Fig. 12 is a cross-sectional view of X-ray source 10.

Referring to Fig, 12, in X-ray source 10, an electron gun 19 controlled by an electron beam control unit 62 irradiates a target 11 such as tungsten with an electron beam 16. X-ray 18 is then generated from a position where electron beam 16 impinged on the target (X-ray focal point position 17), and is emitted (output). As can be seen from Figs. 11 and 12, X-ray source 10 is a transmissive X-ray source that outputs an X-ray in the direction that an electron beam is transmitted.

It is noted that an electron beam system is housed in a vacuum container 9, Inside of vacuum container 9 is kept evacuated by a vacuum pump 15, and electron beam 16 accelerated by a high-voyage power supply 14 is emitted from electron gun 19.

X-ray source 10 converges electron beam 16 by an electron beam convergence coil 13, and then deflects electron beam 16 by a deflection yoke 12, so that a position where electron beam 16 impinges on target 11 can be changed. For example, an electron beam 16a deflected by deflection yoke 12 impinges on target 11, and an X-ray 18a is output from an X-ray focal point position 17a. Similarly, an electron beam 16b deflected by deflection yoke 12 impinges on target 11, and an X-ray 18b is output from an X-ray focal point position 17b.

Referring to Fig. 13, scanning of X-ray focal point position 17 will now be described. Fig. 13 is a perspective view of X-ray source 10. As shown in Fig. 13, target 11 is a linear target. Therefore, X-ray source 10 is capable of scanning X-ray focal point position 17 in one direction. In the present embodiment, as shown in Fig. 11, X-ray source 10 is arranged such that target 11 extends along the Y direction.

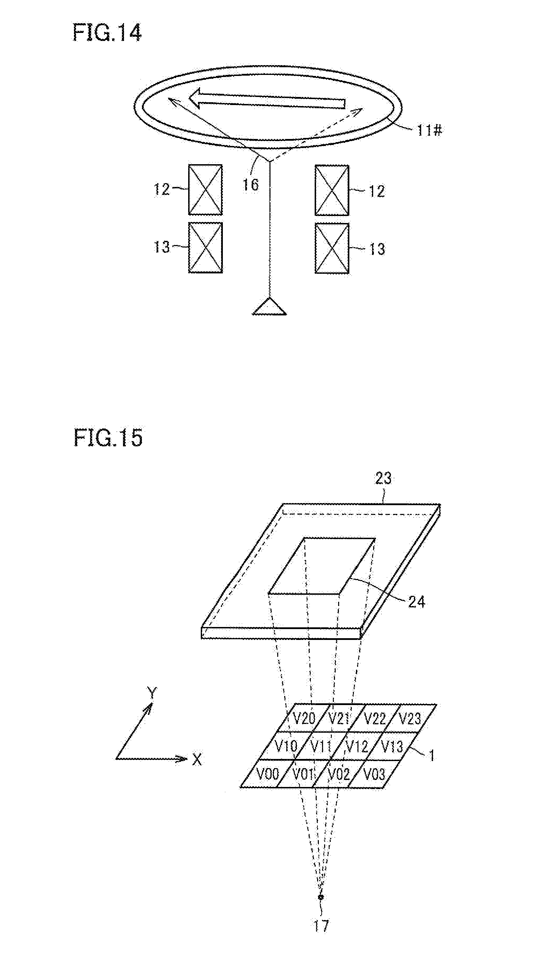

It is noted that, although X-ray source 10 includes linear target 11 in the above description, X-ray source 10 may include a continuous surface target 11 # as shown in Fig. 14. According to this X-ray source 10, X-ray focal point position 17 can be set freely within the range of target 11#. When this X-ray source 10 is adopted in this image pickup method, X-ray focal point, position 17 only needs to be limited to one direction.

It is noted that, to move the X-ray focal point position, the position of the X-ray source itself can be mechanically moved each time, for example. However, the use of the scanning X-ray source can achieve an X-ray inspection apparatus having high maintainability and reliability, without the need to move X-ray source 10 mechanically when moving the X-ray focal point position if the movement is within a certain range. Moreover, X-ray scanning using the scanning X-ray source requires much shorter time than mechanical scanning. Therefore, the scanning X-ray source is adopted in the present method.

### (Image Pickup Technique)

An image pickup technique according to the second embodiment will now be described. Herein, inspection object 1 shall be divided into a plurality of inspection object areas. Fig. 15 shows inspection object areas in the second embodiment. As shown in Fig. 15, inspection object 1 is divided into four in the X direction, and three in the Y direction, Therefore, inspection object 1 is divided into twelve inspection object areas. The respective inspection object areas are denoted by V00, V01, and V23, respectively.

X-ray inspection apparatus 200 linearly moves X-ray detectors 23.1 and 23.2 to a plurality of image pickup positions aligned in the Y direction. X-ray inspection apparatus 200 also scans X-ray focal point position 17 in the Y direction. X-ray inspection apparatus 200 does not move inspection object 1 during these movements. Herein, the moving direction of X-ray focal point position 17 and the moving direction of X-ray detectors 23.1 and 23.2 are opposite to each other X-ray focal point position 17 is moved such that an X-ray transmitted through the inspection object area enters X-ray detector 23.1 or 23.2.

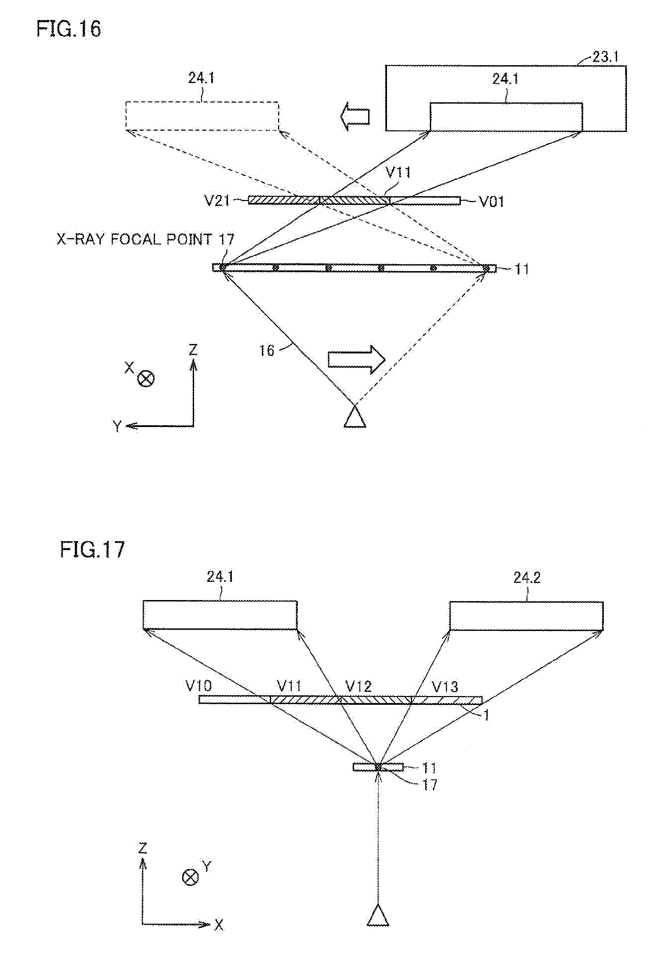

Referring to Fig. 16, the image pickup technique according to the second embodiment will now be described specifically. Fig. 16 illustrates an example of movements of X-ray focal point position 17 and X-ray detector 23.1 in the Y direction in the second embodiment. Fig. 16 shows movements of X-ray focal point position 17 and X-ray detector 23.1 in the case of picking up an image of inspection object area V11.

In the example shown in Fig. 16, six image pickup positions shall be set in the Y direction. At the start of inspection, X-ray detector 23.1 and its light receiving unit 24.1 are located at an image pickup position indicated by the solid lines in Fig. 16. X-ray source 10 sets X-ray focal point position 17 at a position corresponding to the image pickup position, and outputs an X-ray. X-ray detector 23.1 picks up an image of the X-ray transmitted through inspection object 1.

After the initial image pickup is finished, X-ray inspection apparatus 200 moves X-ray detector 23.1 in the +Y direction (to the left in Fig. 16) X-ray inspection apparatus 200 also moves X-ray focal point position 17 in the -Y direction (to the right in Fig. 16). After the completion of movements of X-ray detector 23.1 and X-ray focal point position 17, X-ray source 10 outputs an X-ray, and X-ray detector 23.1 picks up an image.

Such movements of X-ray detector 23.1 and X-ray focal point position 17 and image pickup is repeated, and finally, light receiving unit 24.1 picks up an image at a position indicated by the dotted lines in Fig. 16. It is noted that the whole X-ray detector 23.1 having been moved is not illustrated in Fig. 16. Also in the subsequent drawings, the whole X-ray detector 23.1 (or 23.2) may not be illustrated, and light receiving unit 24.1 (or 24.2) may only be illustrated. By this successive operation, six images are picked up at different angles in the Y direction.

According to X-ray inspection apparatus 200 of the present embodiment, X-ray detectors 23.1 any 23.2 are moved linearly similarly to the first embodiment, so that inspection time can be reduced. Further, according to X-ray inspection apparatus 200, it is not necessary to move inspection object 1 when picking up a plurality of images whose image pick up positions in the Y direction are different.

Moreover, since X-ray inspection apparatus 200 includes two X-ray detectors 23.1 and 23.2, X-ray inspection apparatus 200 can pick up images of X-rays output from a single X-ray focal point position and transmitted through two different inspection object areas, respectively. This will be described with reference to Fig. 17. Fig. 17 shows an example of positional relation among X-ray detectors 1 and 23.2, inspection object 1, and X-ray focal point position 17 at the time of image pickup in the second embodiment. In Fig. 17, X-ray detectors 23.1 and 23.2, inspection object 1, and X-ray focal point position 17 are seen from Y direction.

Referring to Fig 17, when an X-ray output from X-ray focal point position 17 is transmitted through inspection object area V11 to enter light receiving unit 24.1, the X-ray is concurrently transmitted through inspection object area V13 to enter light receiving unit 242.

Therefore, X-ray inspection apparatus 200 can pick up a plurality of images whose image pick up positions in the Y direction are different for the respective two inspection object areas by successive scanning of X-ray focal point position 17. This results in reduction of overall inspection time.

In the case of using a plurality of X-ray detectors moving on a circular trajectory, the plurality of X-ray detectors may not be operated independently depending on geometric conditions. It is particularly preferable that the distance between the X-ray source and the X-ray detectors should be smaller for higher speed, however, in that case, independent operation of the plurality of X-ray detectors on a circular trajectory will be more difficult due to the size of X-ray detectors. The present embodiment does not raise such a problem since each X-ray detector is moved linearly.

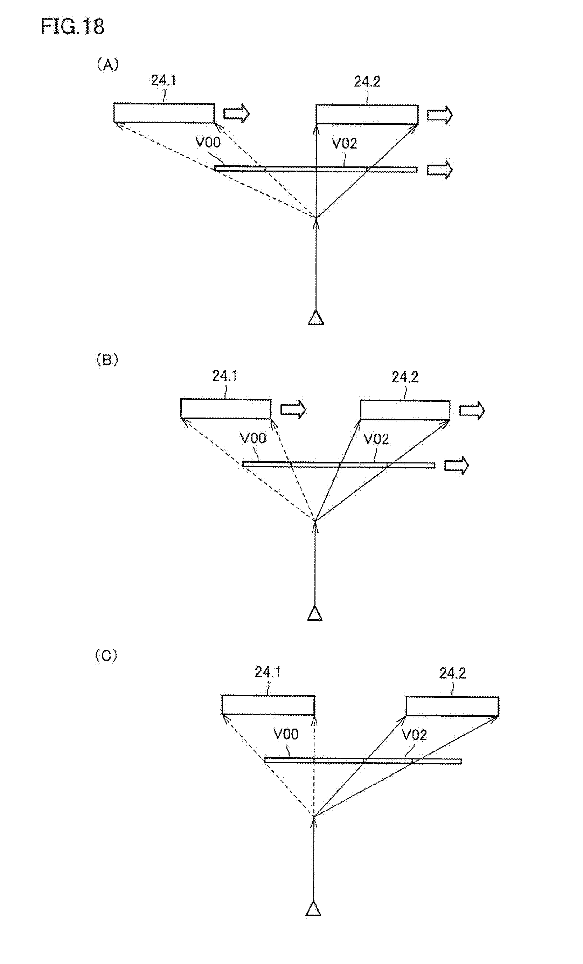

X-ray inspection apparatus 200 moves X-ray detector 23.1, X-ray detector 23.2, and inspection object 1 in the X direction in order to pick up images of the inspection object area at a plurality of positions in the X direction. This movement will now be described with reference to Fig. 18. Fig. 18 illustrates movements of X-ray detector 23.1, X-ray detector 23.2, and inspection object 1 in the X direction in the second embodiment.

Fig. 18A shows an arrangement of X-ray detector 23.1, X-ray detector 23.2, and inspection object 1 in the X direction at the start of inspection. In this arrangement, an X-ray transmitted through inspection object area V00 enters light receiving unit 24.1 An X-ray transmitted through inspection object area V02 enters light receiving unit 24.2.

After X-ray detector 23.1 (or X-ray detector 23.2) picks up images at all the image pickup positions in X position in Fig. 18A, X-ray inspection apparatus 200 moves X-ray detector 23.1 (or X-ray detector 23.2) in the +X direction (to the right in Fig. 18A). After the completion of image pickup by X-ray detectors 23.1 and 23.2, X-ray inspection apparatus 200 moves inspection object 1 in the +X direction.

Fig. 18B shows an arrangement in the X direction of X-ray detector 23.1, X-ray detector 23.2, and inspection object 1 having been moved from the arrangement shown in Fig. 18A In this arrangement, an X-ray transmitted through inspection object area V00 enters light receiving unit 24.1. An X-ray transmitted through inspection object area V02 enters light receiving unit 24.2. However, the incident angles of X-rays differ from those in Fig. 18A.

After X-ray detector 23.1 (or X-ray detector 23.2) picks up images at all the image pickup positions in X position in Fig. 18B, X-ray inspection apparatus 200 moves X-ray detector 23.1 (or X-ray detector 23.2) in the +X direction (to the right in Fig. 18B). After the completion of image pickup by X-ray detectors 23.1 and 23.2, X-ray inspection apparatus 200 moves inspection object 1 in the +X direction.

Fig. 18C shows an arrangement in the X direction of X-ray detector 23.1, X-ray detector 23.2, and inspection object 1 having been moved from the arrangement shown in Fig. 18B. In this arrangement, an X-ray transmitted through inspection object area V00 enters light receiving unit 24.1. An X-ray transmitted through inspection object area V02 enters light receiving unit 24.2. However, the incident angles of X-rays differ from those in Figs. 18A and 18B.

With the movements in the X direction shown in Fig. 18, images picked up at three X positions are acquired for each of inspection object areas V00 and V02. Since there are six image pickup positions at each X position whose Y positions are different as described with reference to Fig. 16, images picked up from different directions of 3×6=18 can be obtained for each inspection object area.

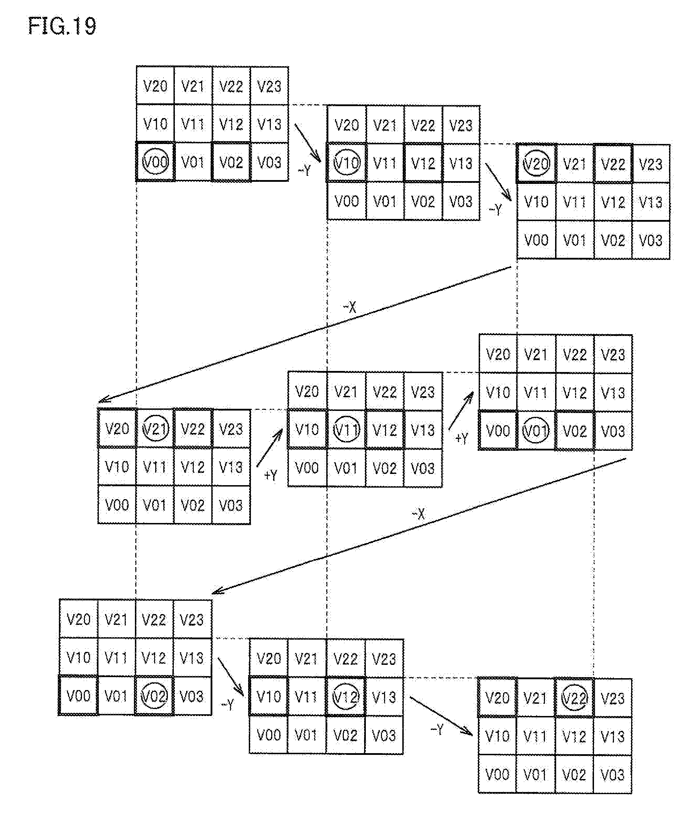

Referring to Fig. 19, the operation of X-ray inspection apparatus 200 when inspecting inspection object areas V00, V10, V20, V02, V12, and V22 will be described. Fig. 19 shows an example of part of operation of X-ray inspection apparatus 200 when inspecting a a plurality of inspection object areas.

Description is started from the state in which inspection object I arranged such that images of inspection object areas V00 and V02 are picked up. In this state, X-ray inspection apparatus 200 picks up images of inspection object areas V00 and V02 at a plurality of Y positions. Specifically, X-ray inspection apparatus 200 scans X-ray focal point position 17 in the Y direction and moves X-ray detectors 23.1 and 23.2 in the Y direction to pick up images of inspection object areas V00 and V02. It is noted that in Fig. 19, inspection object areas whose images are picked up are shown enclosed by bold frames. In addition, the central position of X-ray source 10 is encircled in Fig. 19.

Next, X-ray inspection apparatus 200 moves inspection object 1 in the -Y direction (downward in Fig. 19) such that images of inspection object areas V10 and V12 can be picked up. X-ray inspection apparatus 200 scans X-ray focal point position 17 and moves X-ray detectors 23.1 and 23.2 to pick up images of inspection object areas V10 and V12 at a plurality of Y positions.

Next, X-ray inspection apparatus 200 moves inspection object 1 further in the -Y direction such that images of inspection object areas V20 and V22 can be picked up. X-ray inspection apparatus 200 scans X-ray focal point position 17 and moves X-ray detectors 23.1 and 23.2 to pick up images of inspection object areas V20 and V22 at a plurality of Y positions.

Then, X-ray inspection apparatus 200 moves inspection object 1, X-ray detector 23.1, X-ray detector 23.2 in the -X direction (to the left in Fig. 19). X-ray inspection apparatus 200 then picks up images of inspection object areas V20 and V22 at X positions different from those in the previous image pickup. Thereafter, a set of movement in the -Y direction and image pickup is repeated twice to pick up images of inspection object areas V10 and V12 and images of inspection object areas V00 and V02.

Then, X-ray inspection apparatus 200 moves inspection object 1, X-ray detector 23.1, X-ray detector 23.2 further in the -X direction. X-ray inspection apparatus 200 then picks up images of inspection object areas V00 and V02 at X positions different from those in the previous image pickup. Thereafter, a set of movement in the +Y direction and image pickup is repeated twice to pick up images of inspection object areas V10 and V12 and images of inspection object areas V20 and V22.

Image pickup as described above allows X-ray inspection apparatus 200 to inspect a plurality of inspection object areas while minimizing the moving distance of inspection object 1.

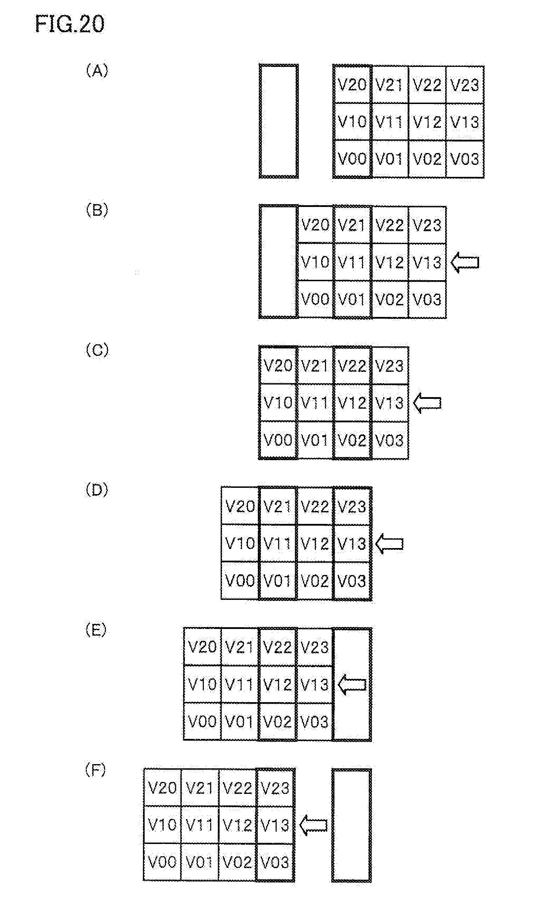

Moreover, all the inspection object areas can be inspected by utilizing X-ray inspection apparatus 200. Referring to Fig. 20, an example of operation of X-ray inspection apparatus 200 when inspecting all the inspection object areas will now be described. Fig. 20 illustrates an example of operation of X-ray inspection apparatus 200 when inspecting all the inspection object areas. It is noted that in Fig. 20, inspection object areas at the same position are shown enclosed by bold frames to indicate position relation of inspection object 1 before and after movement.

First, X-ray inspection apparatus 200 picks up an image of each inspection object area for the initial position of inspection object 1 (Fig. 20A). Specifically, X-ray inspection apparatus 200 picks up images of each inspection object area at a plurality of (herein, six) Y positions by combining the scanning of X-ray focal point position 17, the movement of X-ray detectors 23.1 and 23.2 in the Y direction, and the movement of inspection object 1 in the Y direction, and the movement of X-ray detectors 23.1 and 23.2 in the X direction as already described.

X-ray inspection apparatus 200 moves inspection object 1 in the -X direction (to the left in Fig. 20) to pick up an image of each inspection object area for the next position of inspection object 1 (Fig. 20B).

Similarly, X-ray inspection apparatus 200 acquires an image of each inspection object area for each position of inspection object 1 shown in Figs. 20C to 20F. As a result, X-ray inspection apparatus 200 can acquire images of each inspection object area from different directions of 6×6=36.

It is noted that X-ray detectors 23.1 and 23.2 are moved in the X direction in the respective states shown in Figs. 20A to 20F in the above description, however, this operation may be omitted, and X-ray detectors 23.1 and 23.2 may be fixed in the X direction. In this case, X-ray inspection apparatus 200 can pick up images of each inspection object area at a total of two positions in the X direction. Therefore, X-ray inspection apparatus 200 can acquire images of each inspection object area from different directions of 2×6=12.

### (Flow of Process)

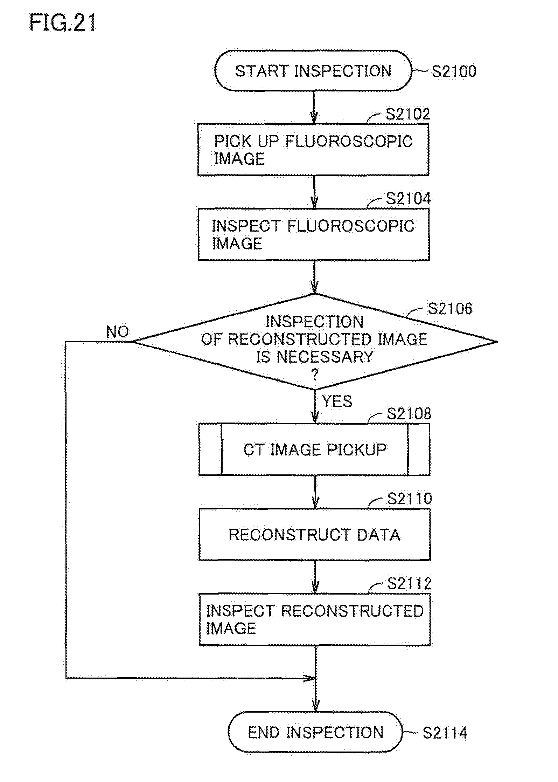

Fig. 21 is a flowchart of overall X-ray inspection according to the second embodiment. Referring to Fig. 21, the flow of overall X-ray inspection according to the second embodiment will now be described.

Referring to Fig. 21, first, when the process is started (step S2100), X-ray inspection apparatus 200 moves the inspection object area to a position where an image pickup can be performed to pick up a fluoroscopic image (step S2102).

X-ray inspection apparatus 200 inspects the fluoroscopic image and determines whether or not the field of view (the scope picked up in the fluoroscopic image) of inspection object 1 is acceptable based on the acquired fluoroscopic image (step S2104). Since various methods for acceptance/rejection determination have been proposed and known, detailed description thereof will not be provided.

Thereafter, X-ray inspection apparatus 200 determines whether or not inspection by a reconstructed data image is necessary (step S2106). A reference for determination may be set in advance based on design information such as the CAD data, or it may be determined based on the result of acceptance/rejection determination of fluoroscopic image. By way of example, in inspection of mounting boards, when components are mounted only on one side, it is possible to determine acceptance/rejection from the fluoroscopic image and, therefore, the acceptance/rejection determination using the reconstructed image may not be necessary.

If the inspection by the reconstructed data is unnecessary (NO at step S2106), X-ray inspection apparatus 200 ends the inspection (step S2114).

If the inspection by the reconstructed image is necessary (YES at step S2106), X-ray inspection apparatus 200 then performs CT image pickup for the inspection object area (step S2108). In the CT image pickup, X-ray inspection apparatus 200 picks up images of the inspection object area from a plurality of directions. Details of step S2108 will be described later.

Next, X-ray inspection apparatus 200 generates a reconstructed data image from the images picked up from a plurality of directions (step S2110). Various methods for reconstruction have been proposed and, by way of example, the Feldkamp method may be adopted.

Thereafter, X-ray inspection apparatus 200 determines acceptance/rejection with the reconstructed data (step S2110). As the method for determining acceptance/rejection, a method directly using the three-dimensional data, a method using two-dimensional data (tomographic image), or a method using one-dimensional data (profile) may be possible. These methods for determining acceptance/rejection are well known, and the method for determining acceptance/rejection suitable for the item to be inspected may be used. Therefore, detailed description will not be repeated here. X-ray inspection apparatus 200 then ends the inspection (step S2118).

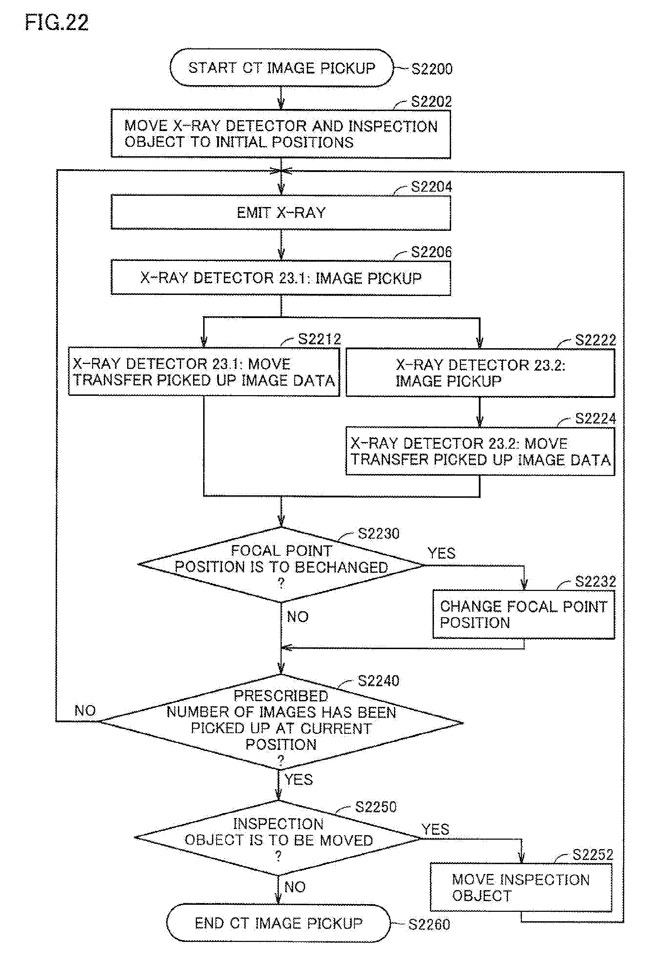

CT image pickup according to the second embodiment will now be described in detail with reference to Fig. 22. Fig. 22 is a flowchart of the CT image pickup process illustrated in Fig. 21. It is noted that, of the three branches of the flowchart in Fig. 21, the left part represents the operation of X-ray detector 23.1, the right part represents the operation of X-ray detector 23.2, and the process steps are aligned in the lateral direction means that the process steps take place concurrently.

Referring to Fig. 22, when the CT image pickup process is started (step S2200), operation unit 70 moves inspection object 1 at step S2202 such that an inspection object area to be inspected is moved to an appropriate position. Further, operation unit 70 also moves X-ray detectors 23.1 and 23.2 to the initial position. The positions of X-ray detectors 23.1 and 23.2 and the position of inspection object 1 may be set by using an encoder if mounted on X-ray detector drive units 22.1 and 22.2 or inspection object drive mechanism 20. Alternatively, these positions may be set using a general detector (such as a laser displacement gauge).

Thereafter, operation unit 70 sets X-ray focal point position 17 at a predetermined position to emit an X-ray (step S2204). Operation unit 70 picks up an image by X-ray detector 23.1 (step S2206). The time of image pickup (detector exposure time) may be set in advance, or a desired time may be set by the user based on the visual observation.

At step S2212, operation unit 70 moves X-ray detector 23.1 to the next image pickup position, and transfers data on the image picked up by X-ray detector 23.1 to memory 90, for example, for the reconstruction process by reconstruction unit 76. In parallel therewith, operation unit 70 picks up an image by X-ray detector 23.2 at step S2222.

At step S2224, operation unit 70 moves X-ray detector 23.2 to the next image pickup position, and transfers data on the image picked up by X-ray detector 23.2 to memory 90, for example, for the reconstruction process by reconstruction unit 76.

Then, operation unit 70 determines whether X-ray focal point position 17 needs to be changed (step S2230). Operation unit 70 determines whether the focal point position needs to be changed based on, for example, whether the number of changes of the focal point position has reached a predetermined number.

If X-ray focal point position 17 needs to be changed (YES at step S2230), operation unit 70 changes X-ray -focal point position 17 at step S2232, and then advances the process into step S2240. If X-ray focal point position 17 does not need to be changed (NO at step S2230), operation unit 70 advances the process into step S2240.

At step S2240, operation unit 70 determines whether the number of picked up images at the current inspection object position has reached a prescribed number. Operation unit 70 performs the determination based on, for example, a result of counting the number of image pickups or a result of counting the number of movements of X-ray detectors 23.1 and/or 23.2. If the number has not yet reached the prescribed number (NO at step S2240), operation unit 70 repeats the process from step S2204.

If the number has reached the prescribed number (YES at step S2240), operation unit 70 determines whether inspection object 1 needs to be moved at step S2250. Operation unit 70 determines that inspection object 1 needs to be moved, for example, when the number of movements of inspection object 1 has not yet reached a predetermined number. Alternatively, operation unit 70 determines that inspection object 1 needs to be moved when the total number of picked up images has not yet reached a predetermined number.

When the inspection object needs to be moved (YES at step S2250), operation unit 70 moves inspection object 1 in the X direction at step S2252. Operation unit 70 then repeats the process from step S2204.

When the inspection object does not need to be moved (NO at step S2250), operation unit 70 ends the CT image pickup process (step S2260).

In the present embodiment, X-ray detectors 23.1 and 23.2 shall be arranged such that the gap between light receiving units 24.1 and light receiving unit 24.2 may be equal to the width of light receiving unit 24.1 or 24.2. With this arrangement, all the areas of inspection object 1 can be inspected by moving X-ray detectors 23.1 and 23.2 in the X direction.

Further, while one X-ray detector 23.1 (or 23.2) is picking up an image, X-ray inspection apparatus 200 shall move the other X-ray detector 23.2 (or 23.1) to the next image pickup position. According to this method, time for moving X-ray detectors 23.1 and 23.2 overlaps with time for image pickup, so that overall inspection time can be further reduced. It is noted that, in the present embodiment, an ordinary mechanism shall be applied such that two X-ray detectors do not interfere with each other while being moved independently in the X direction.

### (Modification)

X-ray inspection apparatus 200 may include three or more X-ray detectors. When inspection object 1 is larger than a light receiving unit of a detector, inspection time can be reduced by using many X-ray detectors.

Conversely, only a single X-ray detector may be provided. Such a structure is sufficient when the inspection object area is so small that an image of the whole area can be picked up once.

### [Third Embodiment]

### (Structure)

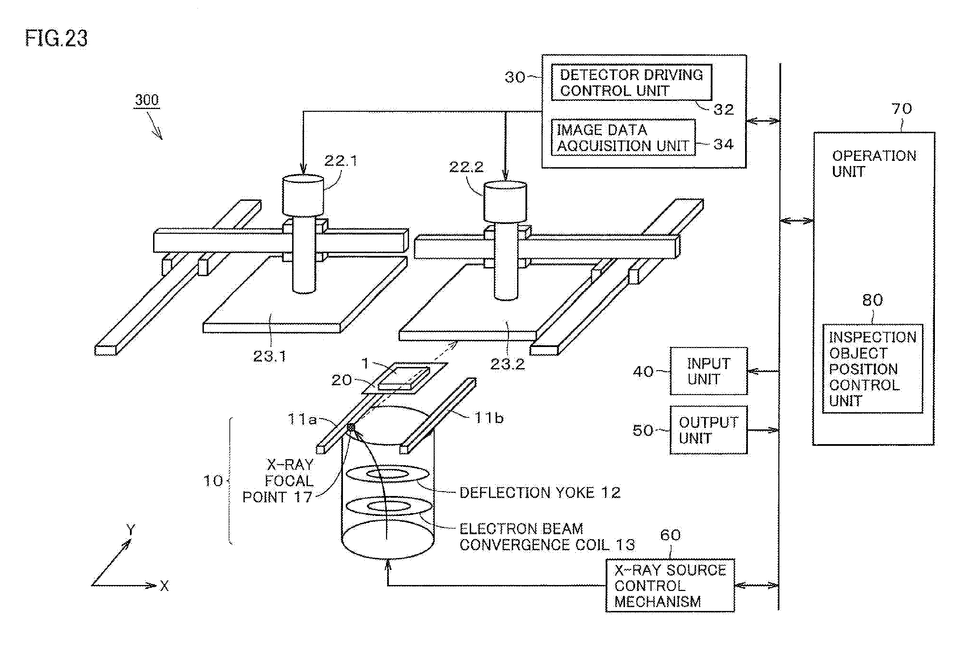

A structure of an X-ray inspection apparatus 300 according to a third embodiment will now be described with reference to Fig. 23. Fig. 23 illustrates the structure of X-ray inspection apparatus 300 according to the third embodiment.

X-ray inspection apparatus 300 has a structure similar to that of the second embodiment except for the structure or X-ray source 10. X-ray source 10 has two linear reflective targets 11a and 11b opposed to each other. X-ray source 10 can thereby output an X-ray of higher intensity than an X-ray source having a transmissive target. This is because a reflective target has higher thermal emission, and an electron of higher energy can impinge thereon. Therefore, X-ray inspection apparatus 300 can achieve reduction of exposure time and improved picture quality of an X-ray image.

### (Image Pickup Technique)

X-ray inspection apparatus 300 can pick up images at a plurality of Y positions by scanning an X-ray in the Y direction and moving X-ray detectors 23.1 and 23.2 linearly in the Y direction, similarly to X-ray inspection apparatus 200 according to the second embodiment.

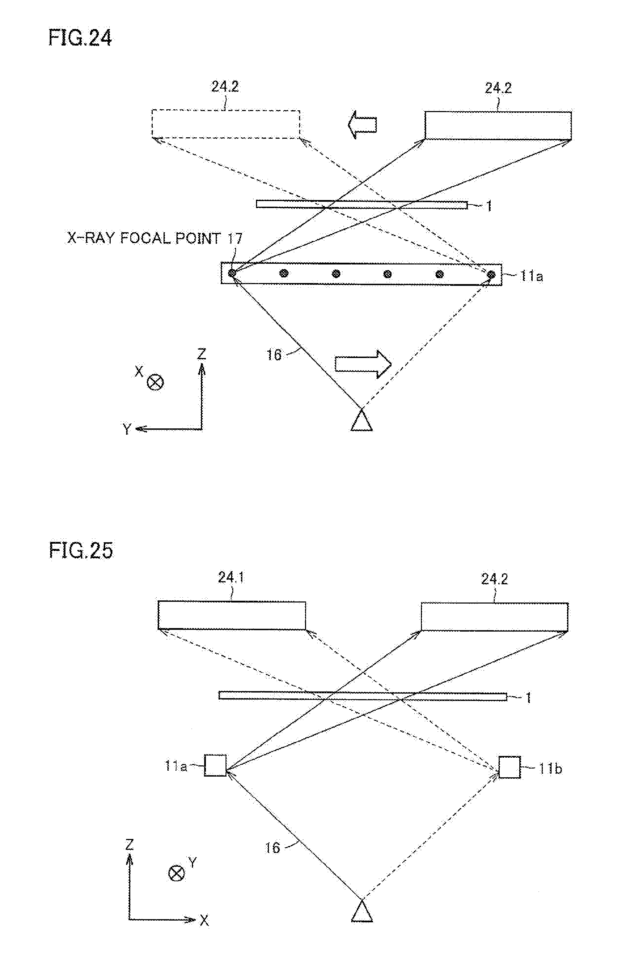

Fig. 24 illustrates an example of movements of X-ray focal point position 17 and X-ray detector 23.2 in the Y direction in the third embodiment. Fig. 24 shows movements of X-ray focal point position 17 and X-ray detector 23.2 in the case of picking up images of X-rays output from target 11a and transmitted through the inspection object area. The meaning of this drawing is similar to that of the description of Fig. 16, and detailed description thereof will not be repeated.

According to X-ray inspection apparatus 300 of the present embodiment, X-ray detectors 23.1 and 23.2 are moved linearly similarly to the first and second embodiments, so that inspection time can be reduced. Further, according to X-ray inspection apparatus 300, it is necessary to move inspection object 1 when picking up a plurality of images whose image pickup positions in the Y direction are different, similarly to the second embodiment.

Moreover, since X-ray inspection apparatus 300 includes two targets 11a, 11b and two X-ray detectors 23.1 and 23 2, images of an X-ray transmitted through a single inspection object area can be picked up from two directions by switching the X-ray focal point position between the targets, without moving X-ray detectors 23.1, 23.2 and inspection object 1.

This will be described with reference to Fig. 25. Fig. 25 shows an example of positional relation among X-ray detectors 23.1 and 23.2, inspection object 1, and X-ray focal point position 17 at the time of image pickup in the third embodiment. In Fig. 25, X-ray detectors 23.1 and 23.2, inspection object 1, and X-ray focal point position 17 are seen from the Y direction. Referring to Fig. 25, when an X-ray is output from target 11a, an image of the inspection object area is picked up by light receiving unit 24.2. When an X-ray is output from target 11b, an image of the inspection object area is picked up by light deceiving unit 24.1.

In particular, while one X-ray detector 23.1 (or 23.2) is picking up an image, X-ray inspection apparatus 300 shall move the other X-ray detector 23.2 (or 23.1) to the next image pickup position. According to this method, time for moving X-ray detectors 23.1 and 23.2 overlaps with time for image pickup, so that overall inspection time can be further reduced. It is noted that the targets are switched by electron beam scanning, which is done at high speed, and hardly affects inspection time. Time required for electron beam scanning is several milliseconds, while time for mechanical movement requires several hundreds of milliseconds.

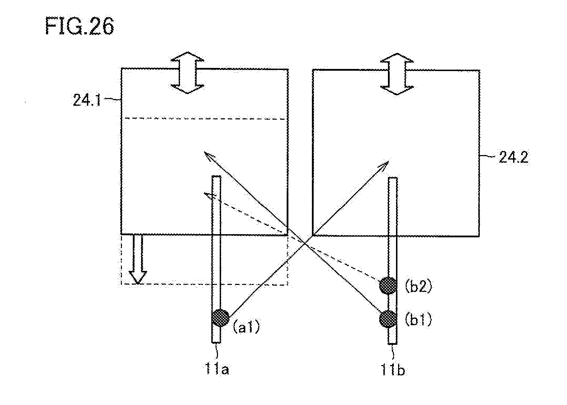

Referring to Fig. 26, independent movement of the detectors will be described. Fig. 26 illustrates independent movement of the detectors according to the third embodiment. First, X-ray inspection apparatus 300 detects an X-ray output from a focal point position b1 on target 11b by light receiving unit 24.1 located at a position indicated by the solid line. Next, X-ray inspection apparatus 300 switches the target, and outputs an X-ray at a focal point position a1 on target 11a. X-ray inspection apparatus 300 picks up an image of this X-ray by light receiving unit 24.2. Meanwhile, X-ray inspection apparatus 300 moves light receiving unit 24.1 to a position indicated by dotted lines. When image pickup of the X-ray by light receiving unit 24.2 is finished, X-ray inspection apparatus 300 outputs an X-ray at a focal point position b2, and picks up an image of the X-ray by light receiving unit 24.1 located at a position indicated by dotted lines.

X-ray inspection apparatus 300 can pick up images at two positions in the X direction during successive X-ray scanning. Therefore, X-ray inspection apparatus 300 can pick up images from 2×(the number of image pickup positions in the Y direction) directions during successive X-ray scanning.

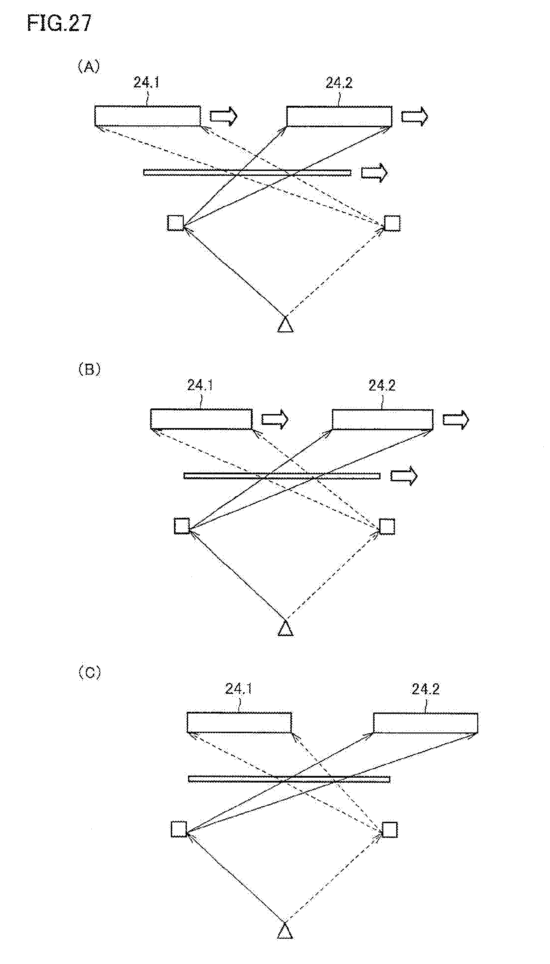

It is noted that, when the number of picked up images is insufficient, X-ray inspection apparatus 300 can increase the number of picked up images by moving detectors 23.1 and 23.2 and inspection object 1 in the X direction, similarly to the embodiments already described. The movements are shown in Fig. 27. Fig. 27 illustrates movements of X-ray detectors 23.1, 23.2 and inspection object 1 in the X direction in the third embodiment. The details of Fig. 27 are identical to those described with reference to Fig. 18 in the second embodiment, and the detailed description thereof will not be repeated.

### (Flow of Process)

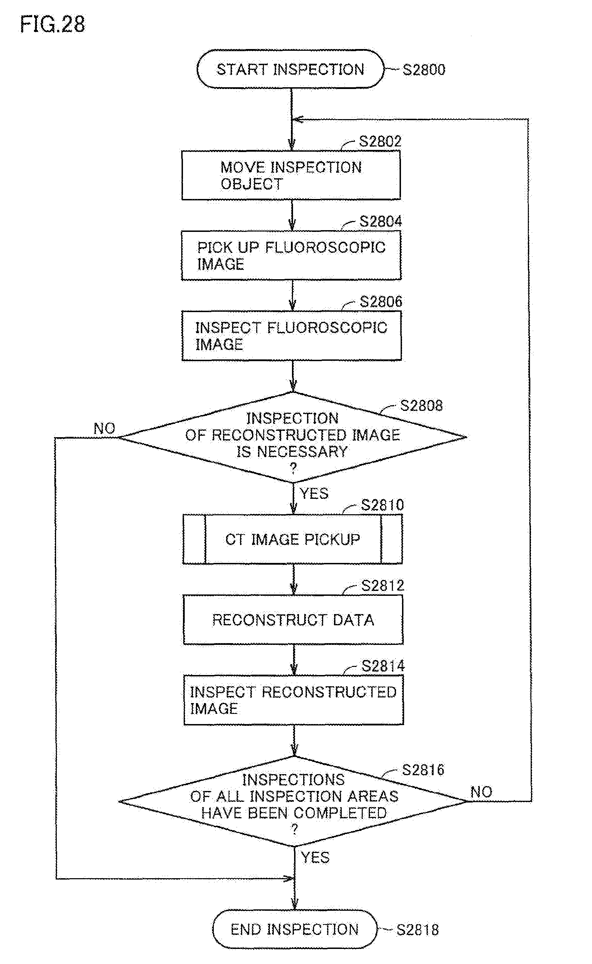

Fig. 28 is a flowchart of overall X-ray inspection according to the third embodiment. Since the flow of this process and the details of each step are substantially similar to those described with reference to Fig. 8 in the first embodiment, description thereof will not be repeated. However, the details of CT image pickup at step S2810 are different.

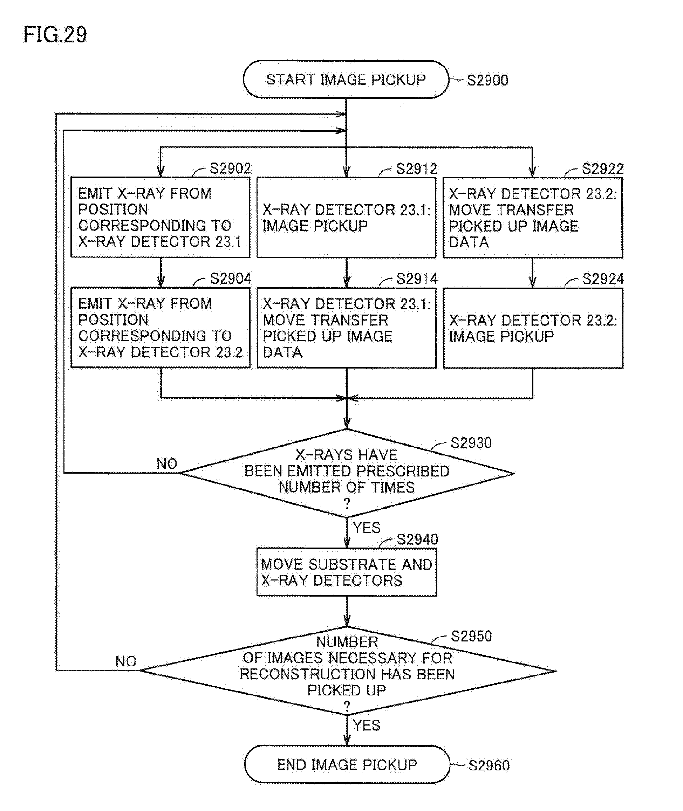

The details of CT image pickup according to the third embodiment will be described with reference to Fig. 29. Fig. 29 is a flowchart of the CT image pickup process illustrated in Fig. 28. In Fig, 29, of the three branches of the flowchart, the left part represents the operation of X-ray source 10, the central part represents the operation of X-ray detector 23.1, the right part represents the operation of X-ray detector 23.2, and the process steps are aligned in the lateral direction means that the process steps take place concurrently.

When the CT image pickup process is started (step S2900), operation unit 70 moves the X-ray focal point to a position corresponding to X-ray detector 23.1 to emit an X-ray (step S2902), and picks up an image by X-ray detector 23.1 (step S2912). In parallel therewith, operation unit 70 moves X-ray detector 23.2 to the next image pickup position, and transfers data on the image picked up by X-ray detector 23.2 to memory 90, for example, for the reconstruction process by reconstruction unit 76 (step S2922). It is noted that this process is unnecessary immediately after the start of image pickup, that is, when there is no image data picked up by X-ray detector 23.2.

Operation unit 70 moves the X-ray focal point to a position corresponding to X-ray detector 23.2 to emit an X-ray (step S2904), and picks up an image by X-tray detector 23.2 (step S2924). In parallel therewith, operation unit 70 moves X-ray detector 23.1 to the next image pickup position, and transfers data on the image picked up by X-ray detector 23.1 to memory 90 for the reconstruction process by reconstruction unit 76 (step S2914).

Then, operation unit 70 determines whether X-ray rays have been emitted a prescribed number of times at the current positions of inspection object 1 and the X-ray detectors (step S2930). If the number has not yet reached the prescribed number (NO at step S2930), operation unit 70 returns the process to steps S2902, 2912 and 2922. If the number has reached the prescribed number (YES at step S2930), operation unit 70 moves inspection object 1 (substrate) and the X-ray detectors in the X direction (step S2940), It is noted that operation unit 70 may determine whether picked up images have reached a prescribed number instead of step S2930.

Then, operation unit 70 determines whether the number of images necessary for reconstruction has been picked up (step S2950). If the necessary number of images has been picked up (YES at step S2950), operation unit 70 ends the CT image pickup process (step S2960). If the necessary number of images has not been picked up, operation unit 70 returns the process to steps S2902, 2912 and 2922.

### [Fourth Embodiment]

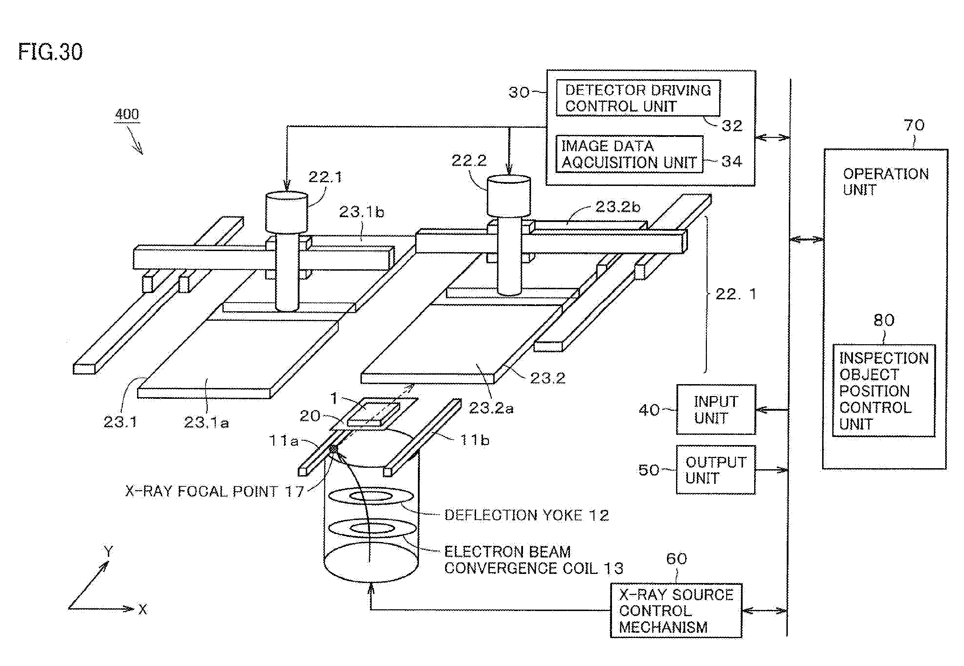

A structure of an X-ray inspection apparatus 400 according to a fourth embodiment will now be described with reference to Fig. 30. Fig. 30 illustrates the structure of X-ray inspection apparatus 400 according to the fourth embodiment.

X-ray inspection apparatus 400 has a structure similar to that of the third embodiment except for the structure of X-ray detectors 23.1 and 23,2. In the fourth embodiment, X-ray detector 23.1 (23.2) is a combination of two X-ray detectors 23.1 a and 23.1b (23.2a, 23.2b) aligned in the Y direction.

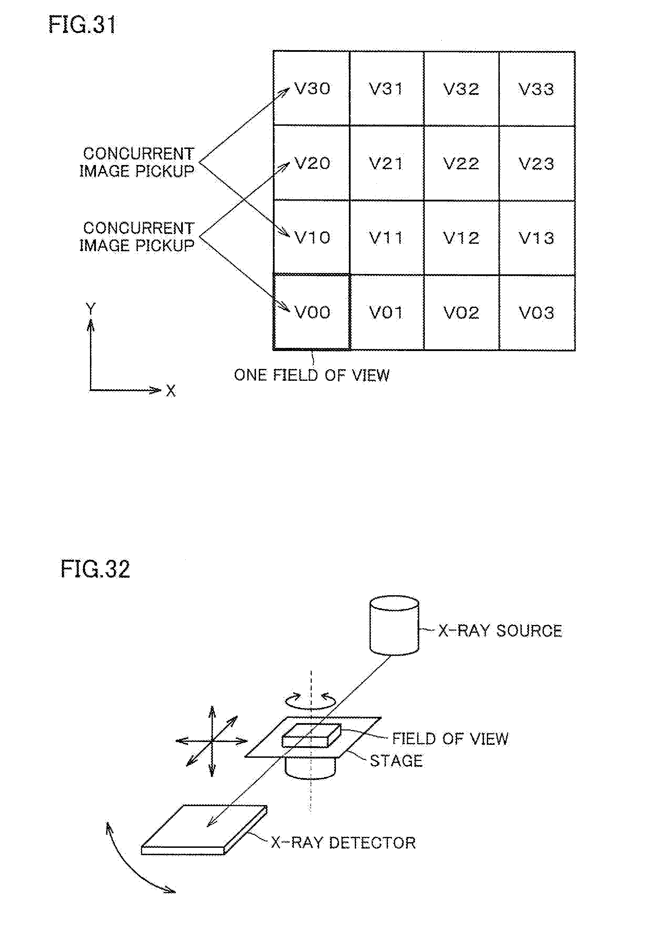

X-ray inspection apparatus 400 can eliminate X-ray detectors 23.1 and 23.2 in the Y direction, as well as exerting the effects of X-ray inspection apparatus 300 according to the third embodiment. This will be described with reference to Fig. 31. Fig. 31 illustrates an image pickup technique according to the fourth embodiment

According to X-ray inspection apparatus 400, images of two inspection object areas (fields of view) aligned in the longitudinal direction can be picked up concurrently. Therefore, when there are a plurality of inspection object areas in the Y direction, the number of movements of X-ray detectors in the Y direction can be reduced to about half It is noted that three or more X-ray detectors may be combined in the Y direction.

Since an X-ray detector having an integral, large-size light receiving unit is difficult to prepare or expansive, it is practical to use a plurality of X-ray detectors in combination as described above,

### [Others]

As a matter of course, a suitable combination of the above-described respective embodiments also falls within the scope of the present invention. For example, in the first and second embodiments, the X-ray detectors may be aligned in the Y direction as in the fourth embodiment.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### DESCRIPTION OF THE REFERENCE SIGNS

1 inspection object; 2 circuit component; 9 vacuum vessel; 10 X-ray source; 11 target; 12 deflection yoke; 13 electron beam convergence coil; 14 high-voltage power supply; 15 vacuum pump; 16 electron beam; 17 X-ray focal point position; 18 X-ray; 19 electron gun; 20 inspection object moving mechanism; 22 X-ray detector drive unit; 22a robot arm; 22b detector support unit; 23 X-ray detector; 24 light receiving unit; 25a, 25b rail; 30 image acquisition control mechanism, 32 detector driving control unit; 34 image data acquisition unit; 40 input unit; 50 output unit; 60 X-ray source control mechanism; 62 electron beam control unit; 70 operation unit; 72 X-ray source control unit; 74 image acquisition control unit; 76 reconstruction unit; 78 acceptance/rejection determination unit; 80 inspection object position control unit; 82 X-ray focal point position calculation unit; 84 image pickup condition setting unit; 90 memory; 92 X-ray focal point position information; 94 image pickup condition information; 96 program; 98 image data; 100 X-ray inspection apparatus; 200 X-ray inspection apparatus, 300 X-way inspection apparatus; 400 X-ray inspection apparatus.

## Claims

1. An X-ray inspection method for picking up images output from an X-ray source (10) and transmitted through an inspection object area of an object (1) by an X-ray detection unit (23), to reconstruct three-dimensional data of said inspection object area based on the images as picked up, comprising the steps of:
picking up said images with relative positional relation between an X-ray focal point position (17) of said X-ray source and said inspection object area changed, and with said X-ray detection unit moved to an image pickup position determined by said relative positional relation between said X-ray focal point position and said inspection object area (S902, S904, S910);
repeating said step of picking up said images such that, with respect to said inspection object area, an angle formed by an imaginary plane including a point to be said X-ray focal point position and a line segment connecting said X-ray focal point position and said inspection object area takes a plurality of different values (S908, S912); and
reconstructing said three-dimensional data from a plurality of images picked up for said inspection object area at a plurality of said angles (S812).

2. The X-ray inspection method according to claim 1, wherein
said X-ray focal point position is fixed, and
said object is moved in said step of picking up said images,

3. The X-ray inspection method according to claim 2, wherein
said step of repeating includes the steps of
moving said X-ray detection unit linearly to a plurality of said image pickup positions aligned in a first direction,
moving said X-ray detection unit in a second direction different from said first direction, and
moving said X-ray detection unit linearly to another plurality of said image pickup positions aligned in said first direction after moving said X-ray detection unit in said second direction.

4. The X-ray inspection method according to claim 1, wherein said step of repeating includes the step of scanning said X-ray focal point position in a first direction in which a plurality of said image pickup positions are aligned.

5. The X-ray inspection method according to claim 4, wherein in said step of repeating, said X-ray focal point position is scanned on a straight line along said first direction.

6. The X-ray inspection method according to claim 5, wherein said step of repeating includes the steps of
moving said X-ray detection unit linearly to the plurality of said image pickup positions aligned in said first direction,
moving said X-ray detection unit in a second direction different from said first direction, and
moving said X-ray detection unit linearly to the plurality of said image pickup positions aligned in said first direction after moving said X-ray detection unit in said second direction.

7. The X-ray inspection method according to claim 5, wherein
said inspection object area is divided into a plurality of partial areas in a second direction different from said first direction,
said X-ray detection unit includes a plurality of X-ray detectors aligned in said second direction, and
in said step of moving said X-ray detection unit in said first direction, each of said X-ray detectors is moved linearly in said first direction such that said X-rays output from said X-ray focal point position in common and transmitted through said partial areas different from each other enter said X-ray detectors different from each other.

8. The X-ray inspection method according to claim 7, wherein in said step of moving said X-ray detection unit in said first direction, while a part of said plurality of X-ray detectors is picking up said images, another part of said X-ray detectors different from said part of said plurality of X-ray detectors is moved in said first direction.

9. The X-ray inspection method according to claim 4, wherein
said X-ray source is a scanning X-ray source capable of scanning said X-ray focal point position on a plurality of lines along said first direction,
said X-ray detection unit includes a plurality of X-ray detectors,
in said step of moving said X-ray detection unit in said first direction, each of said X-ray detectors is moved linearly in said first direction such that said X-rays output from said lines different from each other and transmitted through said inspection object area enter said X-ray detectors different from each other, and
in said step of repeating, said X-ray focal point position is scanned on each of said lines.

10. The X-ray inspection method according to claim 9, wherein said scanning X-ray source includes a plurality of reflective targets arranged on said plurality of lines, respectively.

11. The X-ray inspection method according to claim 9, wherein in said step of moving said X-ray detection unit in said first direction, while a part of said plurality of X-ray detectors is picking up said images, another part of said plurality of X-ray detectors different from said part of said X-ray detectors is moved in said first direction.

12. The X-ray inspection method according to claim 9, wherein said step of repeating includes the steps of
moving said X-ray detection unit in a second direction different from said first direction, and
moving said X-ray detection unit linearly to a plurality of said image pickup positions aligned in said first direction after moving said X-ray detection unit in said second direction.

13. The X-ray inspection method according to claim 1, wherein said X-ray detection unit includes a plurality of light receiving units aligned in a first direction.

14. An X-ray inspection apparatus for reconstructing three-dimensional data of an inspection object area of an object, comprising:
an X-ray source (10) for outputting X-rays;
an X-ray detection unit (23) for picking up images of said X-ray;
a moving mechanism (22) for moving said X-ray detection unit; and
a control unit (70) for controlling operation of said X-ray inspection apparatus, wherein
said control unit is configured to
cause said X-ray source and said X-ray detection unit to pick up images with relative positional relation change and movement performed by causing said X-ray source to change relative positional relation between an X-ray focal point position (17) of said X-ray source and said inspection object area and by causing said moving mechanism to move said X-ray detection unit to an image pickup position determined by said relative positional relation between said X-ray focal point position and said inspection object area,
cause pickup of said images to be repeated such that, with respect to said inspection object area, an angle formed by an imaginary plane including a point to be said X-ray focal point position and a line segment connecting said X-ray focal point position and said inspection object area takes a plurality of different values, and
reconstruct said three-dimensional data from a plurality of images picked up for said inspection object area at a plurality of said angles.

15. The X-ray inspection apparatus according to claim 14, wherein said X-tray source is a scanning X-ray source capable of scanning said X-ray focal point position on a single straight line along a first direction in which a plurality of said image pickup positions are aligned.

16. The X-ray inspection apparatus according to claim 14, wherein
said X-ray source is a scanning X-ray source capable of scanning said X-ray focal point position on a plurality of lines along a first direction in which a plurality of said image pickup positions are aligned,
said X-ray detection unit includes a plurality of X-ray detectors, and
each of said X-ray detectors is arranged such that said X-rays output from said lines different from each other and transmitted through said inspection object area enter said X-ray detectors different from each other

17. The X-ray inspection apparatus according to claim 16, wherein said scanning X-ray source includes a plurality of reflective targets arranged on said plurality of lines, respectively,
